# EUROPEAN PATENT APPLICATION

(11) **EP 4 761 325 A1**
(43) Date of publication of application: **17.06.2026**
(21) Application number: 24856698.6
(22) Date of filing: 02.08.2024
(51) Int. Cl.: H04W 24/02, H04W 72/29, H04W 68/02, H04W 76/12, H04L 41/0813, H04W 88/08, H04W 92/12

(54) **METHOD AND APPARATUS FOR MOBILITY AND PAGING IN MOBILE COMMUNICATION SYSTEM**

(30) Priority: 23.08.2023 KR 20230110631
(71) Applicant: Samsung Electronics Co., Ltd., Suwon-si, Gyeonggi-do 16677 (KR)
(72) Inventor: BAE, Beomsik, Suwon-si Gyeonggi-do 16677 (KR); BAEK, Sangkyu, Suwon-si Gyeonggi-do 16677 (KR); JUNG, Byounghoon, Suwon-si Gyeonggi-do 16677 (KR); JUNG, Sangyeob, Suwon-si Gyeonggi-do 16677 (KR)
(74) Representative: Gulde & Partner
(86) International application number: PCT/KR2024/011418
(87) International publication number: WO 2025/042085

(57) **Abstract**

The present disclosure relates to a 5G or 6G communication system for supporting a higher data transmission rate. The present disclosure can be applied to intelligent services (for example, smart homes, smart buildings, smart cities, smart cars or connected cars, healthcare, digital education, retail businesses, security- and safety-related services, and the like) on the basis of 5G communication technology and IoT-related technology. More particularly, the present disclosure relates to a method performed by a central unit (CU) of a first base station in a wireless communication system. The method may comprise the steps of: receiving, from a terminal, a radio measurement report message for a serving cell related to a distributed unit (DU) of the first base station; and on the basis of the radio measurement report message, transmitting a terminal context setup request message, which is related to a serving cell change to a cell related to a DU of a second base station, to the DU of the second base station through a connection that is set between the CU of the first base station and the DU of the second base station.

## Description

### [Technical Field]

The disclosure relates to a mobile communication system and, more specifically, to a method and an apparatus for, in a mobile communication system using a split base station (split RAN), improving inter-cell mobility of a terminal in an RRC CONNECTED state and paging response performance of a terminal in an RRC IDLE state or RRC INACTIVE state, based on multi-interface connection in the split base station.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure provides a method and an apparatus capable of effectively providing services in a mobile communication system.

The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

Based on the discussion described above, the disclosure may provide a method performed by a central unit (CU) of a first base station in a wireless communication system, the method including receiving, from a terminal, a radio measurement report message for a serving cell related to a distributed unit (DU) of the first base station, and based on the radio measurement report message, transmitting a terminal context setup request message related to a serving cell change to a cell related to a DU of a second base station to the DU of the second base station through a connection established between the CU of the first base station and the DU of the second base station.

In addition, the disclosure may provide a central unit (CU) of a first base station in a wireless communication system, the CU including a transceiver and a controller connected to the transceiver, wherein the controller is configured to receive, from a terminal, a radio measurement report message for a serving cell related to a distributed unit (DU) of the first base station, and based on the radio measurement report message, transmit a terminal context setup request message related to a serving cell change to a cell related to a DU of a second base station to the DU of the second base station through a connection established between the CU of the first base station and the DU of the second base station.

### [Advantageous Effects of Invention]

The disclosure provides an apparatus and a method capable of effectively providing services in a mobile communication system.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates a conceptual diagram of a next-generation mobile communication system supporting network energy saving according to an embodiment of the disclosure.
FIG. 2 is a diagram illustrating an example structure of a next-generation mobile communication system supporting network energy saving according to an embodiment of the disclosure.
FIG. 3 is a diagram illustrating an example structure of a next-generation mobile communication system according to an embodiment of the disclosure.
FIG. 4 illustrates an example of a process of establishing, by one DU, a connection with a CU of the same base station and a connection with a CU of another base station according to an embodiment of the disclosure.
FIG. 5A and FIG. 5B are diagrams illustrating an example of configurations of messages used in a connection establishment procedure performed between a DU and a CU included in the same base station according to an embodiment of the disclosure.
FIG. 6 is a diagram illustrating an example of a configuration of a message used by a CU to transfer modified configuration information of the CU to a DU of the same base station as that including the CU according to an embodiment of the disclosure.
FIG. 7A and FIG. 7B are diagrams illustrating an example of configurations of messages used by a DU to perform a connection establishment procedure with a CU included in a base station different from that including the DU according to an embodiment of the disclosure.
FIG. 8 is a diagram illustrating an example of a configuration of a message used by a DU to transfer modified configuration information of the DU to a CU included in the same base station as that including the DU according to an embodiment of the disclosure.
FIG. 9A, FIG. 9B, and FIG. 9C are diagrams illustrating an example of configurations of messages used by a DU to transfer modified configuration information of the DU to a CU included in a base station different from that including the DU according to an embodiment of the disclosure.
FIG. 10A and FIG. 10B is a diagram illustrating an example of a configuration of a message used by a CU to transfer modified configuration information of the CU to a DU of a base station different from that including the CU according to an embodiment of the disclosure.
FIGS. 11A and 11B are diagrams illustrating an example of configurations of messages used by a CU or DU to transfer information for releasing a F1 auxiliary connection to a DU or CU included in a base station different from that including the CU or DU according to an embodiment of the disclosure.
FIG. 12 illustrates an example of a process of changing a serving cell from a base station connected to a terminal in an RRC CONNECTED state to another base station according to an embodiment of the disclosure.
FIG. 13 illustrates an example of a process of changing a serving cell from a base station connected to a terminal in an RRC CONNECTED state to another base station according to an embodiment of the disclosure.
FIG. 14 illustrates an example of a determination by a CU for a serving cell change of a terminal in an RRC CONNECTED state at the CU, and a relevant process according to an embodiment of the disclosure.
FIG. 15 illustrates an example of a process of paging a terminal in an RRC IDLE state or RRC INACTIVE state in an architecture where base station functions are split, and responding to the paging by the terminal according to an embodiment of the disclosure.
FIG. 16 is a flowchart illustrating an example of processing an initial UL RRC message transfer message by a CU and a relevant process according to an embodiment of the disclosure.
FIG. 17 is a diagram illustrating an example of a configuration of an RRC connection request (RRC connection setup request) message transmitted by a terminal in an RRC IDLE state to a base station according to an embodiment of the disclosure.
FIG. 18 is a diagram illustrating an example of a configuration of a message used by a CU to request a DU to transfer an RRC message transmitted by a terminal to a CU of a different base station according to an embodiment of the disclosure.
FIG. 19A and FIG. 19B illustrate an example of a process of paging a terminal in an RRC IDLE state or RRC INACTIVE state in an architecture in which base station functions are split, and responding to the paging by the terminal according to an embodiment of the disclosure.
FIGS. 20A and 20B are diagrams illustrating an example of configurations of information added to messages for performing a connection establishment procedure between a DU and a CU of a base station different from that including the DU according to an embodiment of the disclosure.
FIG. 21 is a diagram illustrating an example of a configuration of information added to messages used by a CU to transfer modified configuration information of the CU to a DU of a base station different from that including the CU according to an embodiment of the disclosure.
FIG. 22 is a block diagram illustrating a structural example of a base station according to an embodiment of the disclosure and also illustrating a structural example of a distributed unit (DU) of the base station.
FIG. 23 is a block diagram illustrating a structural example of a central unit (CU) of a base station according to an embodiment of the disclosure.
FIG. 24 is a block diagram illustrating a structural example of a user equipment (UE) according to an embodiment of the disclosure.

### [Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

In the following description, a base station is an entity that allocates resources to terminals, and may be at least one of a Node B, a base station (BS), an eNode B (eNB), a gNode B (gNB), a wireless access unit, a base station controller, and a node on a network. A terminal may include a user equipment (UE), a mobile station (MS), a cellular phone, a smartphone, a computer, or a multimedia system capable of performing a communication function. Furthermore, the embodiments of the disclosure as described below may also be applied to other communication systems having similar technical backgrounds or channel types to the embodiments of the disclosure. Moreover, based on determinations by those skilled in the art, the embodiments of the disclosure may also be applied to other communication systems through some modifications without significantly departing from the scope of the disclosure.

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project (3GPP) standards may be used for the sake of descriptive convenience. However, the disclosure is not limited by these terms and names, and may be applied in the same way to systems that conform other standards.

Hereinafter, the disclosure describes a method and an apparatus by which a single distributed unit (DU) simultaneously maintains interface connections with one or more central units (CUs) in an architecture in which base station functions are split, so as to effectively support inter-cell mobility of a terminal in an RRC CONNECTED state.

In addition, hereinafter, the disclosure describes a method and an apparatus by which a single distributed unit (DU) simultaneously maintains interface connections with one or more central units (CUs) in an architecture in which base station functions are split, so that when a terminal in an RRC IDLE state or RRC INACTIVE STATE is paged, a response for the paging of the terminal is effectively supported.

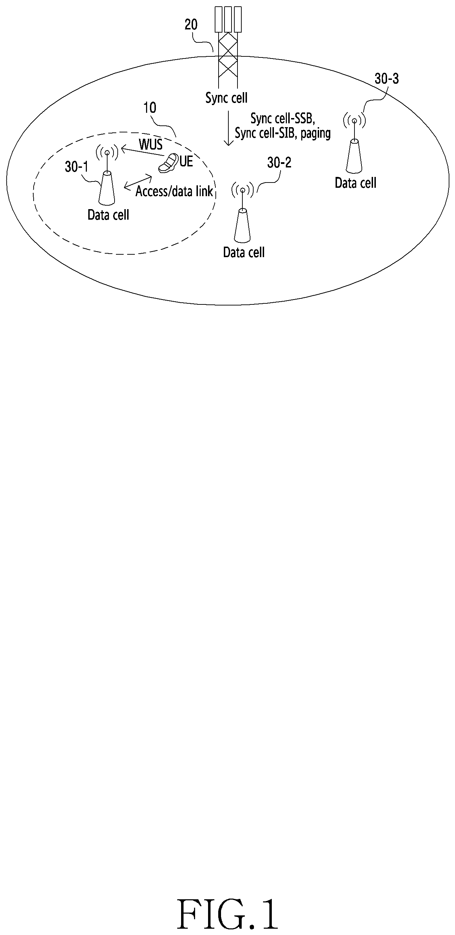

FIG. 1 illustrates a conceptual diagram of a next-generation mobile communication system supporting network energy saving according to an embodiment of the disclosure.

Referring to FIG. 1, a next-generation mobile communication system supporting network energy saving may include a user equipment (UE) 10, a synchronization cell (sync cell) 20, and data cells 30-1, 30-2, and 30-3.

The sync cell 20 may be in a powered-on state. A state of a cell in a powered-on state may be referred to as an active state, and the sync cell 20 according to an embodiment of the disclosure may always be active. The main functions of the active sync cell may include at least some of the following functions.
- Sync cell synchronization signal transmission (Broadcast of Sync cell-Synchronization signal block (SSB))
- Sync cell system information transmission (Broadcast of Sync cell-system information block (SIB))
- Paging message transmission
- Mobility support of UE in RRC idle mode (RRC_IDLE) or RRC inactive mode (RRC_INACTIVE) (Mobility support of RRC_IDLE and RRC_INACTIVE UE)

As described above, the sync cell 20 may be operated in a low-frequency band (e.g., 700 MHz) in which wide coverage is easily secured, in order to transmit control signals to the UE and to efficiently support the mobility of the UE in an RRC idle mode or an RRC inactive mode.

The data cell 30-1, 30-2, or 30-3 may be operated with a receiver (a wake-up receiver, hereinafter, WUR) capable of receiving a wake-up signal (hereinafter, WUS) transmitted by the UE 10, and a transceiver (a main transceiver or main radio, hereinafter, MR) capable of transmitting and receiving data and all control signals other than the wake-up signal to and from the UE 10, and the receiver and the transceiver may be separately mounted thereon. Since it is difficult to predict when the UE 10 transmits a WUS, the data cell 30-1, 30-2, or 30-3 may operate while maintaining the WUR to be always in a powered-on state. On the other hand, if the UE does not transmit and receive data to and from the data cell 30-1, 30-2, or 30-3 for a predetermined time, the data cell 30-1, 30-2, or 30-3 may power off or on the MR for efficient energy saving. A cell state of the data cell 30-1, 30-2, or 30-3 with the MR in a powered-off state may be called inactive, and a cell state of the data cell with the MR in a powered-on state may be called active. The data cell 30-1, 30-2, or 30-3 according to an embodiment of the disclosure may become an active data cell or an inactive data cell according to a predetermined condition. For example, when the specific data cell 30-1 receives a wake-up signal (WUS) transmitted by the UE 10 with a specific signal strength or higher, the data cell may change the state from inactive to active.

Main functions of the active data cell 30-1 may include at least some of the following functions.
- Reception of wake-up signal transmitted by UE (wake-up signal (WUS) reception)
- Data cell synchronization signal transmission (Broadcast of data cell-Synchronization signal block (SSB))
- Data cell system information transmission (Broadcast of Datacell-system information block (SIB))
- Support of Random Access procedure
- Support of UE in RRC connected mode UE and mobility thereof (Support of RRC_CONNECTED UE and its mobility)

Main functions of the inactive data cell 30-2 or 30-3 may include at least some of the following functions.
- Reception of wake-up signal transmitted by UE (wake-up signal (WUS) reception)

Main functions of the UE 10 may include some of the following functions.
- Sync cell selection or reselection for mobility support in RRC idle mode or RRC inactive mode (Sync cell selection or Sync cell reselection)
- Reception of paging message transmitted by sync cell (Reception of paging message)
- Performance of random access procedure with Data cell and establishment of RRC connection with Data cell
- Data transmission and reception with data cell in RRC connected mode

In an example of the next-generation mobile communication system illustrated in FIG. 1, according to an embodiment of the disclosure, a mobile communication system in which a function provided by the sync cell is provided by the data cell and a separate sync cell is not used may be operated. In addition, a mobile communication system may be operated, the system using only a data cell that operates only with a transceiver (main transceiver or main radio, hereinafter, MR) capable of transmitting and receiving all control signals and data to or from the UE without separately using a wake-up signal (hereinafter, WUS) and a relevant transceiver. An example of the system in which the data cell provides a function of the sync cell and a wake-up signal (WUS) is not used may include a 4G LTE mobile communication system or a 5G NR mobile communication system.

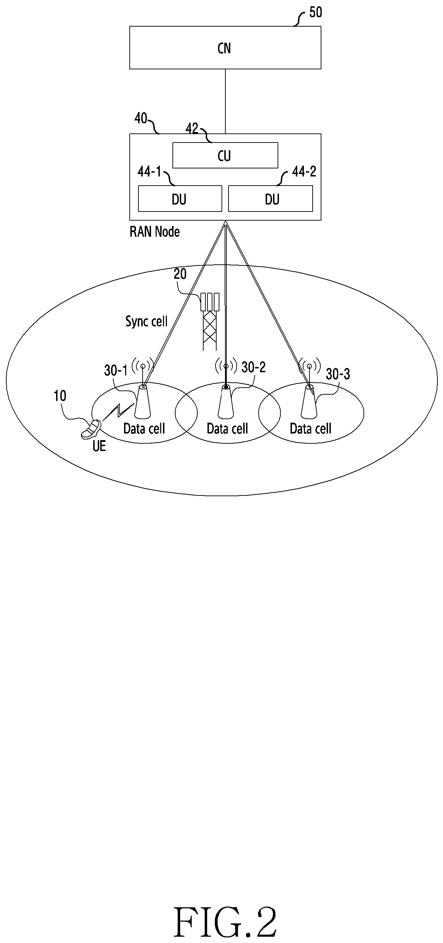

FIG. 2 is a diagram illustrating an example structure of a next-generation mobile communication system supporting network energy saving according to an embodiment of the disclosure.

Referring to FIG. 2, a next-generation mobile communication system supporting network energy saving may include a next-generation base station 40 (g Node B, hereinafter, a gNB, Node B, RAN node or base station), a synchronization cell 20 (sync cell), data cells 30-1, 30-2, and 30-3, a user equipment (UE) 10, and a core network (CN) 50.

According to an embodiment of the disclosure, the RAN node 40 may include a central unit (CU) 42 and one or more distributed units (DUs) 44-1 and 44-2, and the RAN node 40 may be connected to the core network 50 by using an interface between a base station and a core network (CN), such as an S1 or NG interface.

According to an embodiment of the disclosure, the one CU may support one or more DUs, and the one DU 44-1 or 44-2 may support one sync cell 20, one data cell 30-1, 30-2, or 30-3, one or more data cells 30-1, 30-2, and 30-3, or one or more sync cells 20 and one or more data cells 30-1, 30-2, and 30-3. In addition, according to an embodiment of the disclosure, the one CU 42 may include a central unit-control plane (CU-CP) that processes a radio resource control (RRC) layer, and multiple central unit-user planes (CU-UPs) for processing data packets of a UE. The one CU 42 and the one DU 44-1 or 44-2 may be connected through an interface between internal functions of a base station, such as an F1 or W1 interface.

According to an embodiment of the disclosure, the core network 50 may include multiple functions or entities, and the functions or entities supported by the core network may differ according to a system type.

The UE 10 may access an external network through the data cell, the RAN node, and the core network.

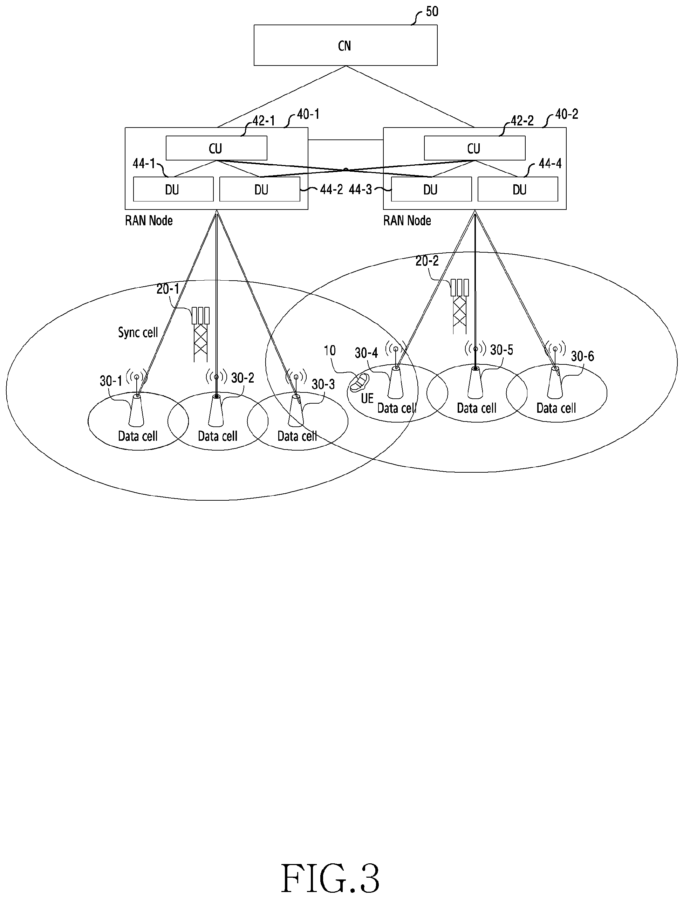

FIG. 3 is a diagram illustrating an example structure of a next-generation mobile communication system according to an embodiment of the disclosure. More specifically, the mobile communication system structure illustrated in FIG. 3 relates to a structure including one or more next-generation base stations that support network energy saving.

Referring to FIG. 3, a next-generation mobile communication system supporting network energy saving may include next-generation base stations 40-1 and 40-2 (g Node B, hereinafter, a gNB, Node B, RAN node or base station), synchronization cells 20-1 and 20-2 (sync cells), data cells 30-1, 30-2, and 30-3, a user equipment (UE) 10, and a core network (CN) 50.

According to an embodiment of the disclosure, the RAN node 40-1 may include a central unit (CU) 42-1 and one or more distributed units (DUs) 44-1 and 44-2. The one RAN node 40-1 may be connected to one or more neighboring RAN nodes 40-2 by using an interface between base stations such as an X2 or Xn interface. The one RAN node 40-1 or 40-2 may be connected to the core network 50 by using an interface between a base station and a core network (CN), such as an S1 or NG interface.

According to an embodiment of the disclosure, the one CU may support one or more DUs, and the one DU 44-1 may support one sync cell 20-1, one data cell 30-1, 30-2, or 30-3, one or more data cells 30-1, 30-2, and 30-3, or one or more sync cells 20-1 and one or more data cells 30-1, 30-2, and 30-3. In addition, the one CU 42-1 may include a central unit-control plane (CU-CP) that processes a radio resource control (RRC) layer, and multiple central unit-user planes (CU-UPs) for processing data packets of a UE. The one DU 44-1 may be connected to the one CU 42-1 to configure an RAN node. In addition, the one DU 44-2 may be connected to the one CU 42-1 to configure an RAN node and, at the same time, may be connected to a CU 40-2 of another RAN node to support inter-cell movement of a UE and UE paging. The one CU 42-1 and one DU 44-1, 44-2, or 44-3 may be connected to each other through an interface between internal functions of a base station, such as an F1 or W1 interface.

According to an embodiment of the disclosure, a cell coverage of the one data cell 30-1, 30-2, or 30-3 may be limited to be within a cell coverage supported by one sync cell 20-1, and a cell coverage of the one data cell 30-4 may be configured over cell coverages supported by one or more sync cells 20-1 and 20-2. That is, a part of the cell coverage of the one data cell 30-4 may be included in the cell coverage supported by the sync cell 20-1, and the remaining part of the cell coverage of the one data cell 30-4 may be included in the cell coverage supported by the sync cell 20-2.

The core network 50 may include multiple functions or entities, and the functions or entities supported by the core network may differ according to a system type.

The UE 10 may access an external network through the data cell, the RAN node, and the core network.

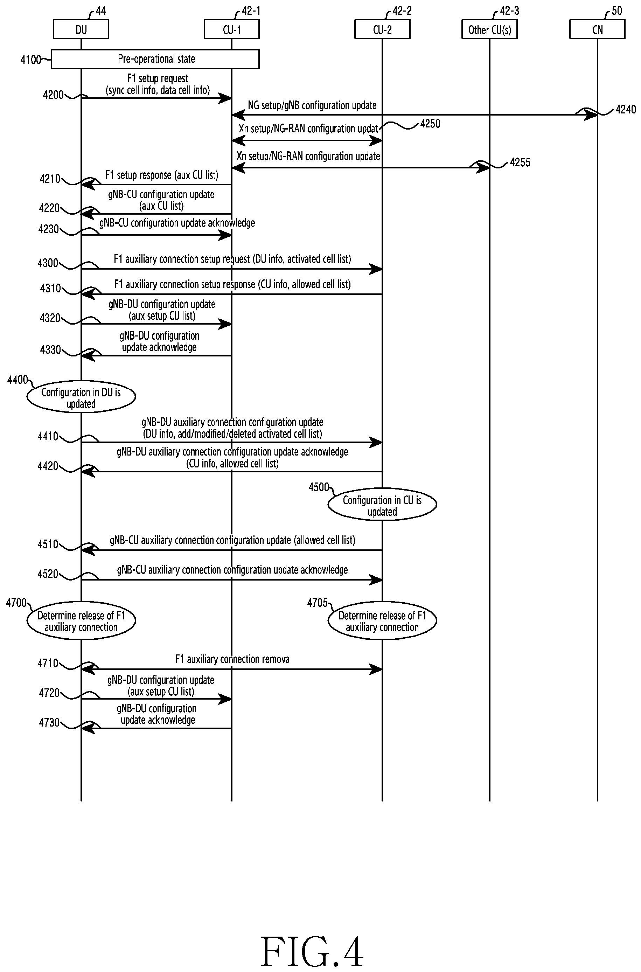

FIG. 4 illustrates an example of a process of establishing, by one DU, a connection with a CU of the same base station and a connection with a CU of another base station according to an embodiment of the disclosure.

According to an embodiment of the disclosure, the DU of FIG. 4 may first complete connection establishment for the CU of the same base station according to configured information, and then perform connection establishment for CUs of other base stations according to the configured information. A signaling message for supporting inter-cell movement of a UE or a signaling message for performing UE paging and a subsequent UE connection procedure may be transferred using an interface connecting the DU and a CU of another base station.

According to an embodiment of the disclosure, referring to FIG. 4, in operation 4100, a DU 44 may receive, from an operation and management (OAM) or the like, operation-related configuration information and a cell configuration supported by the DU 44 in a pre-operation state. The operation-related configuration information of the DU 44 may include information related to a base station including the DU 44 and configuration information for connection to a CU-1 42-1 within the base station. In operation 200, the DU 44 for which configuration related to an operation of the DU has been completed may transfer a F1 setup request message to CU-1 42-1 for connection establishment with CU-1 42-1 of the base station. In operation 4200, before the DU 44 transmits the F1 setup request message to CU-1 42-1, the DU 44 and CU-1 42-1 may first perform a transport layer connection procedure (e.g., a procedure such as stream control transmission protocol (SCTP) connection establishment). The F1 setup request message transmitted in operation 4200 may include information on a sync cell and information on a data cell supported by the DU 44. In operation 4200, if there is no problem in a connection with the DU 44, CU-1 42-1 having received the F1 setup request message from the DU 44 may perform relevant internal configuration and then, in operation 4210, may transmit an F1 setup response message as a response message to the DU 44. The F1 setup response message may include information on a list of other base station CUs that the DU 44 may additionally connect to. In addition, after completing establishment of an F1 interface with the DU 44, in operation 4220, CU-1 42-1 may transmit a CU configuration information modification (gNB-CU configuration update) message to the DU 44, while the CU-1 42-1 includes, in the CU configuration information modification (gNB-CU configuration update) message, information on a list of other base station CUs that the DU 44 may additionally connect to. In operation 4230, the DU 44 having received the CU configuration information modification (gNB-CU configuration update) message from CU-1 42-1 may transmit a CU configuration information modification identification (gNB-CU configuration update acknowledge) message to CU-1 42-1.

According to an embodiment of the disclosure, after completing a connection procedure with CU-1 42-1 of the same base station, the DU 44 may, in operation 4300, transmit an F1 auxiliary connection setup request message to a CU-2 42-2 of another base station for connection establishment with CU-2 42-2 of the other base station, based on information on a list of other base station CUs that the DU 44 may additionally connect to, the information being received by the DU 44 from the OAM in operation 4100, or information on a list of other base station CUs that the DU 44 may additionally connect to, the information being received by the DU 44 from CU-1 42-1 of the same base station in operation 4210 or 4230. In operation 4300, before transmitting the F1 auxiliary connection setup request message, the DU 44 and CU-2 42-2 may first perform a transport layer connection procedure (e.g., a procedure such as stream control transmission protocol (SCTP) connection establishment). The F1 auxiliary connection setup request message transmitted in operation 4300 may include information on the DU 44, and include information on a sync cell and data cells that are activated and are being used by the DU 44. In operation 4300, if there is no problem in a connection with the DU 44, CU-2 42-2 having received the F1 auxiliary connection setup request message from the DU 44 may perform relevant internal configuration and then, in operation 4310, CU-2 42-2 may transmit an F1 auxiliary connection setup response message as a response message to the DU 44. The F1 auxiliary connection setup response message may include information on CU-2 42-2, and may further include information on allowed cells supportable by an F1 interface between CU-2 42-2 and the DU 44 among cells that are activated and are being operated by the DU 44.

According to an embodiment of the disclosure, after the DU 44 completes an F1 auxiliary connection setup procedure of operation 4300 and operation 4310 with CUs of other base stations, the DU 44 may, in operation 4320, transmit a DU configuration information modification (gNB-DU configuration update) message to CU-1 42-1 of the same base station, and the DU 44 may include, in the DU configuration information modification (gNB-DU configuration update) message, information on a list of other base station CUs to which the DU 44 has completed to additionally connect. CU-1 42-1 having received the DU configuration information modification (gNB-DU configuration update) message from the DU 44 may, in operation 4330, transmit a DU configuration information modification identification (gNB-DU configuration update acknowledge) message to the DU 44.

According to an embodiment of the disclosure, when configuration information on the DU 44 or information on cells that are activated and are being operated by the DU 44 is modified, the DU 44 may, in operation 4400, modify internal configuration information and an operation and, if necessary, together with the modification, perform a DU configuration information modification procedure (gNB-DU configuration update procedure) to transfer modified information on the DU 44 to CU-1 42-1 included in the same base station, i.e., the base station including the DU 44. In addition, in operation 4410, the DU 44 may transmit a DU auxiliary connection configuration information modification (gNB-DU auxiliary connection configuration update) message to CU-2 42-2, and the DU auxiliary connection configuration information modification (gNB-DU auxiliary connection configuration update) message may include modified DU information and modified information related to cells that are activated and are being operated by the DU. CU-2 42-2 having received the DU auxiliary connection configuration information modification (gNB-DU auxiliary connection configuration update) message from the DU 44 may perform relevant internal configuration and then, in operation 4420, CU-2 42-2 may transmit a DU auxiliary connection configuration information modification identification (gNB-DU auxiliary connection configuration update acknowledge) message as a response message to the DU 44. The DU auxiliary connection configuration information modification identification (gNB-DU auxiliary connection configuration update acknowledge) message may include modified information on CU-2 42-2 and may include information on allowed cells supportable by an F1 interface between CU-2 42-2 and the DU 44 among cells that are activated and are being operated by the DU 44.

According to an embodiment of the disclosure, when configuration information on CU-2 42-2 or allowance information on cells that are activated and are being operated by the DU 44 is modified in CU-2 42-2, the CU 44 may, in operation 4500, modify internal configuration information and an operation and, if necessary, together with the modification, perform a CU configuration information modification procedure (gNB-CU configuration update procedure) to transfer modified information on CU-2 42-2 to DUs of the same base station as that including the CU 44. In addition, in operation 4510, CU-2 42-2 may transmit a CU auxiliary connection configuration information modification (gNB-CU auxiliary connection configuration update) message to the DU 44, and the CU auxiliary connection configuration information modification (gNB-CU auxiliary connection configuration update) message may include information on allowed cells supportable by an F1 interface between CU-2 42-2 and the DU 44 among cells that are activated and are being operated by the DU 44. The DU 44 having received the CU auxiliary connection configuration information modification (gNB-CU auxiliary connection configuration update) message from CU-2 42-2 may perform relevant internal configuration and then, in operation 4520, the DU 44 may transmit a CU auxiliary connection configuration information modification identification (gNB-CU auxiliary connection configuration update acknowledge) message as a response message to CU-2 42-2.

According to an embodiment of the disclosure, thereafter, in operation 4700 or operation 4705, when one of the DU 44 or CU-2 42-2 determines to release an F1 auxiliary connection between the DU 44 and CU-2 42-2, an F1 auxiliary connection release procedure (F1 auxiliary connection removal procedure) may be performed in operation 4710. After the F1 auxiliary connection release procedure (F1 auxiliary connection removal procedure) is completed, the DU 44 may, in operation 4720, transmit a DU configuration information modification (gNB-DU configuration update) message to the CU-1 42-1 of the same base station, while the DU includes, in the DU configuration information modification (gNB-DU configuration update) message, modified information on a list of other base station CUs to which the DU 44 is additionally connected. CU-1 42-1 having received the DU configuration information modification (gNB-DU configuration update) message from the DU 44 may, in operation 4730, transmit a DU configuration information modification identification (gNB-DU configuration update acknowledge) message to the DU 44.

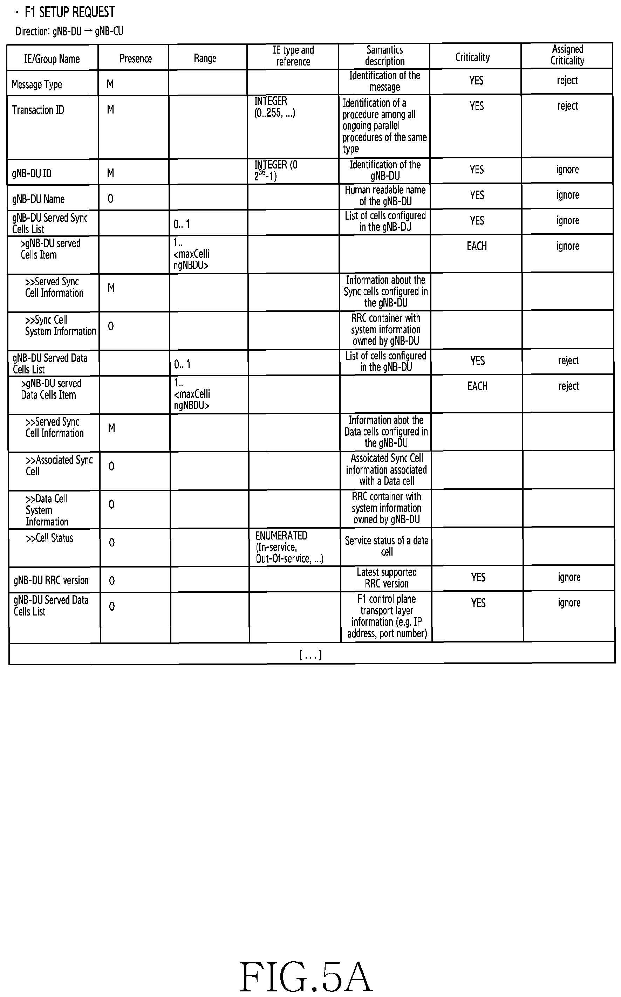

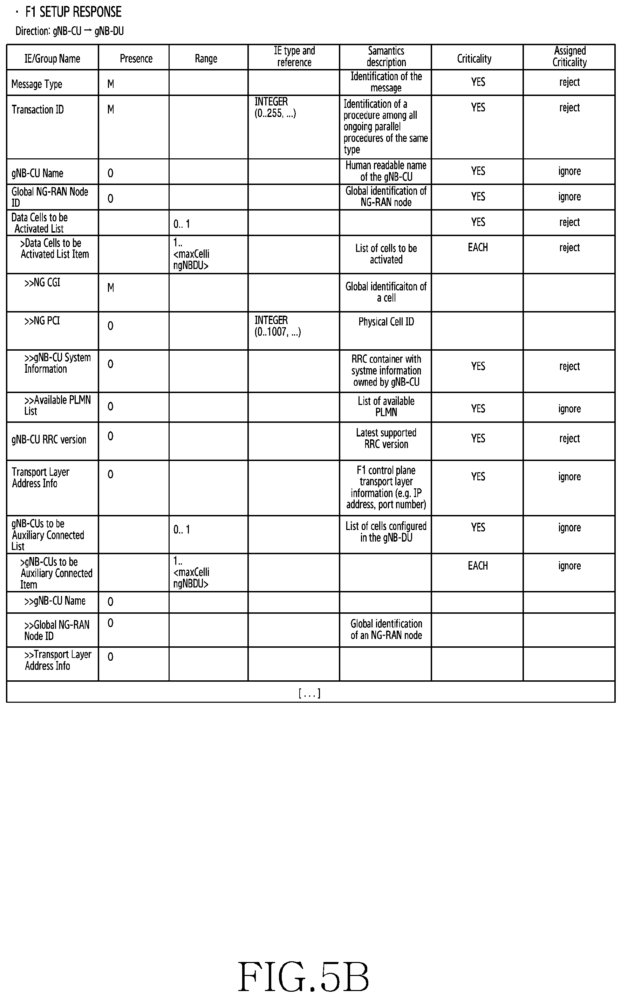

FIG. 5A and FIG. 5B are diagrams illustrating an example of configurations of messages used in a connection establishment procedure performed between a DU and a CU included in the same base station according to an embodiment of the disclosure.

More specifically, FIG. 5A and FIG. 5B are diagrams illustrating configurations of messages used by CUs included in the same base station as that including a DU to perform a connection establishment procedure between the CUs, the messages being used in operation 4200 of the embodiment of FIG. 4.

The message names or information element (IE) names used in FIG. 5A and FIG. 5B are merely an embodiment for the purpose of description, and may be configured as other names or as configurations or values in other forms having the same purpose, and the information and IEs included in FIG. 5 may be additionally supported in a message that has been used.

FIG. 5A illustrates an example of a configuration of an F1 setup request (F1 SETUP REQUEST) message transmitted by a DU to a CU of the same base station.

According to an embodiment of the disclosure, the F1 connection setup request (F1 SETUP REQUEST) message may include a message type IE used to distinguish message types, a transaction ID IE used to distinguish message transactions, a gNB-DU ID IE including identifier information of the DU, and a gNB-DU name IE indicating a name of the DU.

According to an embodiment of the disclosure, the F1 connection setup request (F1 SETUP REQUEST) message may include a gNB-DU served sync cells list IE including pieces of information on sync cells supportable by the DU. The gNB-DU served sync cells list IE may include, for each sync cell/corresponding to each sync cell, a served sync cell information IE including sync cell information and a sync cell system information IE including system information generated by the DU for the corresponding sync cell.

In addition, according to an embodiment of the disclosure, the F1 connection setup request (F1 SETUP REQUEST) message may include a gNB-DU served data cells list IE including pieces of information on data cells supportable by the DU. The gNB-DU served data cells list IE may include, for each data cell/corresponding to each data cell, a served data cell information IE including data cell information, an associated sync cell IE including information on a sync cell associated with the data cell, a data cell system information IE including system information generated by the DU for the corresponding data cell, and a cell status IE including current status information of the corresponding data cell.

In addition, according to an embodiment of the disclosure, the F1 connection setup request (F1 SETUP REQUEST) message may include a gNB-DU RRC version IE for transmitting information on an RRC version processable by the DU, and a transport layer address info IE including information on a transport layer address (e.g., an IP address or a port number) available in an F1 connection, and may further include other necessary IEs.

FIG. 5B illustrates an example of a configuration of an F1 connection setup response (F1 SETUP RESPONSE) message transmitted by a CU to a DU included in the same base station as that including the CU.

According to an embodiment of the disclosure, the F1 connection setup response (F1 SETUP REQUEST) message may include a message type IE used to distinguish message types, a transaction ID IE used to distinguish message transactions, a gNB-CU name IE indicating a name of the CU, and a global NG-RAN node ID IE including identifier information of the base station.

In addition, according to an embodiment of the disclosure, the F1 connection setup response (F1 SETUP RESPONSE) message may include a data cells to be activated list IE including information on a data cell to be activated and used by the DU among data cells supportable by the DU. The data cells to be activated list IE may include, for each data cell/corresponding to each data cell, a NR CGI IE including a cell identifier (cell global identifier) to be used by the corresponding data cell, a NR PCI IE including information on a physical channel identifier (physical cell ID) to be used by the corresponding data cell, a gNB-CU system information IE including system information generated by the CU, and an available PLMN list IE including information on an operator network (public land mobile network (PLMN)) available in the cell.

In addition, according to an embodiment of the disclosure, the F1 connection setup response (F1 SETUP REPONSE) message may include a gNB-CU RRC version IE for transmitting information on an RRC version processable by the CU, and a transport layer address info IE including information on a transport layer address (e.g., an IP address or a port number) available in an F1 connection.

In addition, according to an embodiment of the disclosure, the F1 connection setup response (F1 SETUP RESPONSE) message may include a gNB-CUs to be auxiliary connected list IE including information on other base station CUs to which the DU is able to connect. The gNB-CUs to be auxiliary connected list IE may include, for each CU/corresponding to each CU, a gNB-CU name IE indicating a name of the CU, a global NG-RAN node ID IE including identifier information of the base station, and a transport layer address info IE including information on a transport layer address (e.g., an IP address or a port number) available for an F1 connection.

According to an embodiment of the disclosure, the F1 connection setup response (F1 SETUP RESPONSE) message may further include other necessary IEs.

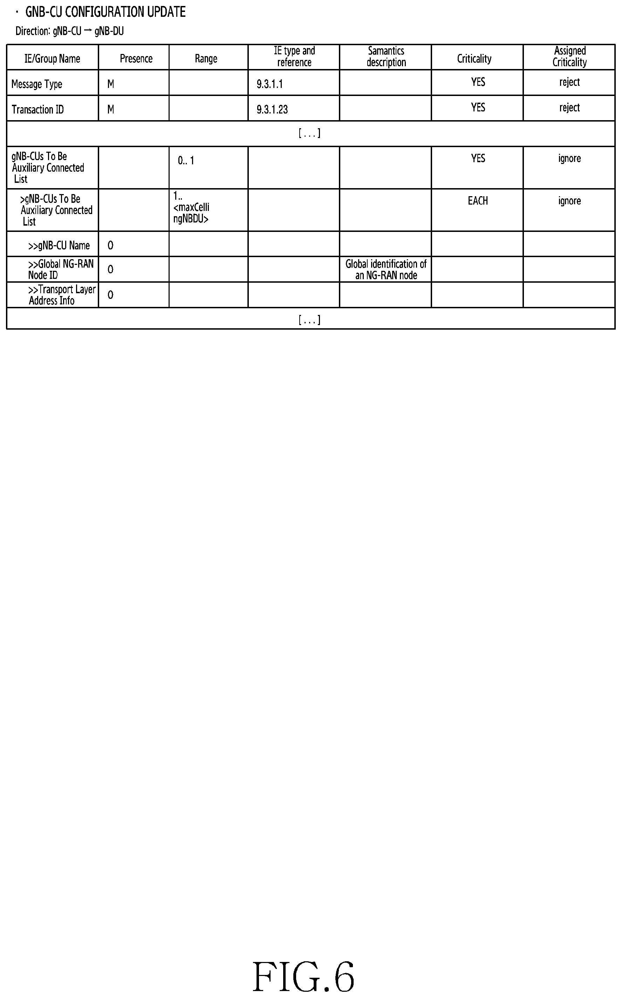

FIG. 6 is a diagram illustrating an example of a configuration of a message used by a CU to transfer modified configuration information of the CU to a DU of the same base station as that including the CU according to an embodiment of the disclosure.

More specifically, FIG. 6 relates to an example of a configuration of a message used by a CU to transfer modified configuration information of the CU to a DU of the same base station as that including the CU, the message being used in operation 4220 of the embodiment of FIG. 4.

The message name or IE names used in FIG. 6 correspond to an embodiment, and may be configured as other names or as configurations or values in other forms having the same purpose.

According to an embodiment of the disclosure, FIG. 6 illustrates an example of a configuration of a CU configuration information modification (gNB-CU CONFIGURATION UPDATE) message for transferring modified configuration information of a CU to a DU. The CU configuration information modification (gNB-CU CONFIGURATION UPDATE) message may include a message type IE used to distinguish message types and a transaction ID IE used to distinguish message transactions.

In addition, according to an embodiment of the disclosure, the CU configuration information modification (gNB-CU CONFIGURATION UPDATE) message may include a gNB-CUs to be auxiliary connected list IE including information on other base station CUs with which the DU is able to establish a connection. The gNB-CUs to be auxiliary connected list IE may include, for each CU/corresponding to each CU, a gNB-CU name IE indicating a name of the CU, a global NG-RAN node ID IE including identifier information of the base station, and a transport layer address info IE including information on a transport layer address (e.g., an IP address or a port number) available for an F1 connection.

The CU configuration information modification (gNB-CU CONFIGURATION UPDATE) message may further include other necessary IEs.

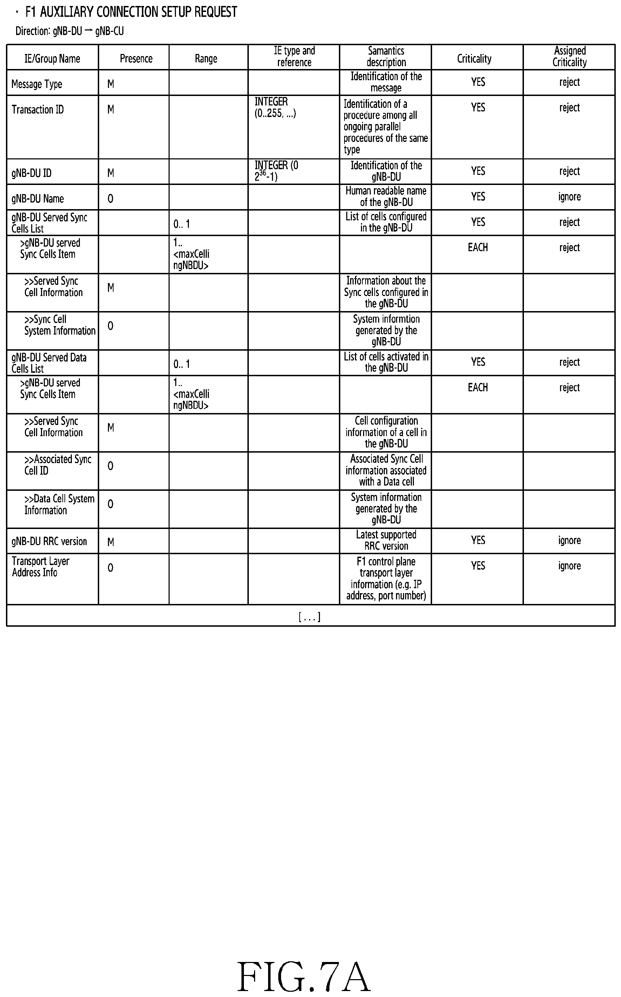

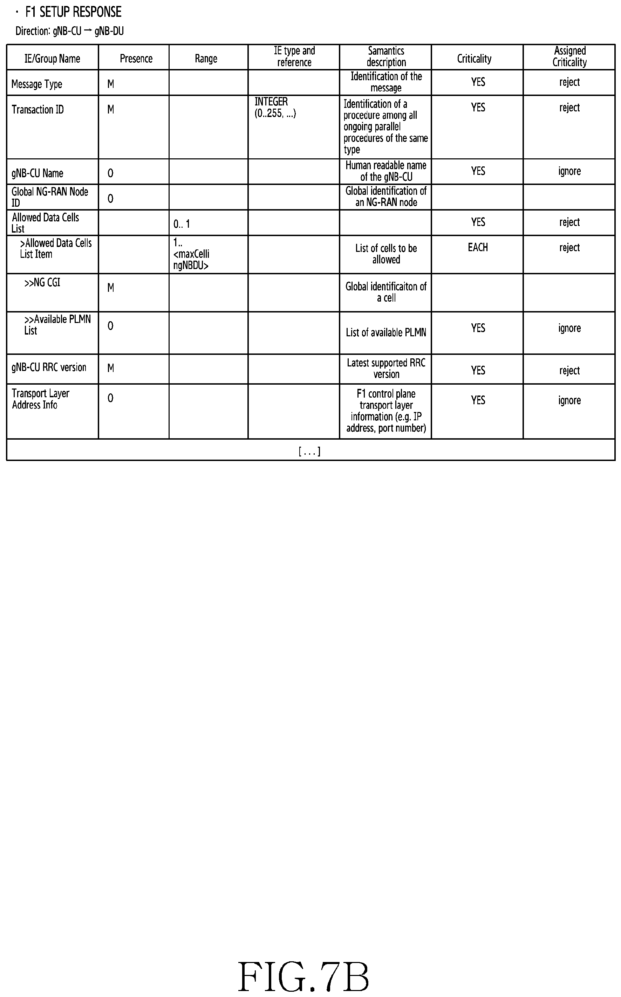

FIG. 7A and FIG. 7B are diagrams illustrating an example of configurations of messages used by a DU to perform a connection establishment procedure with a CU included in a base station different from that including the DU according to an embodiment of the disclosure.

More specifically, the message configurations of FIG. 7A and FIG. 7B may be used in operation 4300 and operation 4310 in the embodiment of FIG. 4.

The message names or IE names used in FIG. 7A and FIG. 7B correspond to an embodiment, and may be configured as other names or as configurations or values in other forms having the same purpose, and the information and IEs included in FIG. 7 may be additionally supported in a message that has been used.

FIG. 7A illustrates an example of a configuration of an F1 auxiliary connection setup request (F1 AUXILIARY CONNECTION SETUP REQUEST) message transmitted by a DU to a CU of a different base station.

According to an embodiment of the disclosure, the F1 auxiliary connection setup request (F1 AUXILIARY CONNECTION SETUP REQUEST) message may include a message type IE used to distinguish message types, a transaction ID IE used to distinguish message transactions, a gNB-DU ID IE including identifier information of the DU, and a gNB-DU name IE indicating a name of the DU.

In addition, according to an embodiment of the disclosure, the F1 auxiliary connection setup request (F1 AUXILIARY CONNECTION SETUP REQUEST) message may include a gNB-DU served sync cells list IE including pieces of information on sync cells that are activated and are being operated by the DU. The gNB-DU served sync cells list IE may include, for each sync cell/corresponding to each sync cell, a served sync cell information IE including sync cell information and a sync cell system information IE including system information generated by the DU for the corresponding sync cell.

In addition, according to an embodiment of the disclosure, the F1 auxiliary connection setup request (F1 AUXILIARY CONNECTION SETUP REQUEST) message may include a gNB-DU activated data cells list IE including pieces of information on data cells that are activated and are being operated by the DU. The gNB-DU activated data cells list IE may include, for each data cell/corresponding to each data cell, a served data cell information IE including data cell information, an associated sync cell IE including information on a sync cell associated with the data cell, and a data cell system information IE including system information generated by the DU for the corresponding data cell.

In addition, according to an embodiment of the disclosure, the F1 auxiliary connection setup request (F1 AUXILIARY CONNECTION SETUP REQUEST) message may include a gNB-DU RRC version IE for transmitting information on an RRC version processable by the DU, and a transport layer address info IE including information on a transport layer address (e.g., an IP address or a port number) available in an F1 connection, and may further include other necessary IEs.

FIG. 7B illustrates an example of a configuration of an F1 auxiliary connection setup response (F1 AUXILIARY CONNECTION SETUP RESPONSE) message transmitted by a CU to a DU included in a base station different from that including the CU.

According to an embodiment of the disclosure, the F1 auxiliary connection setup response (F1 AUXILIARY CONNECTION SETUP RESPONSE) message may include a message type IE used to distinguish message types, a transaction ID IE used to distinguish message transactions, a gNB-CU name IE indicating a name of the CU, and a global NG-RAN node ID IE including identifier information of a base station.

In addition, according to an embodiment of the disclosure, the F1 auxiliary connection setup response (F1 AUXILIARY CONNECTION SETUP RESPONSE) message may include an allowed data cells list IE including information on a data cell allowed to be connected to the CU and used among data cells that are activated and are being used by the DU. The allowed data cells list IE may include, for each data cell/corresponding to each data cell, a NR CGI IE including a cell identifier (cell global identifier) to be used by the corresponding data cell, and an available PLMN list IE including information on an operator network (public land mobile network (PLMN)) available in the cell.

In addition, according to an embodiment of the disclosure, the F1 auxiliary connection setup response (F1 AUXILIARY CONNECTION SETUP RESPONSE) message may include a gNB-CU RRC version IE for transmitting information on an RRC version processable by the CU, and a transport layer address info IE including information on a transport layer address (e.g., an IP address or a port number) available in an F1 connection.

In addition, according to an embodiment of the disclosure, the F1 auxiliary connection setup response (F1 AUXILIARY CONNECTION SETUP RESPONSE) message may further include other necessary IEs.

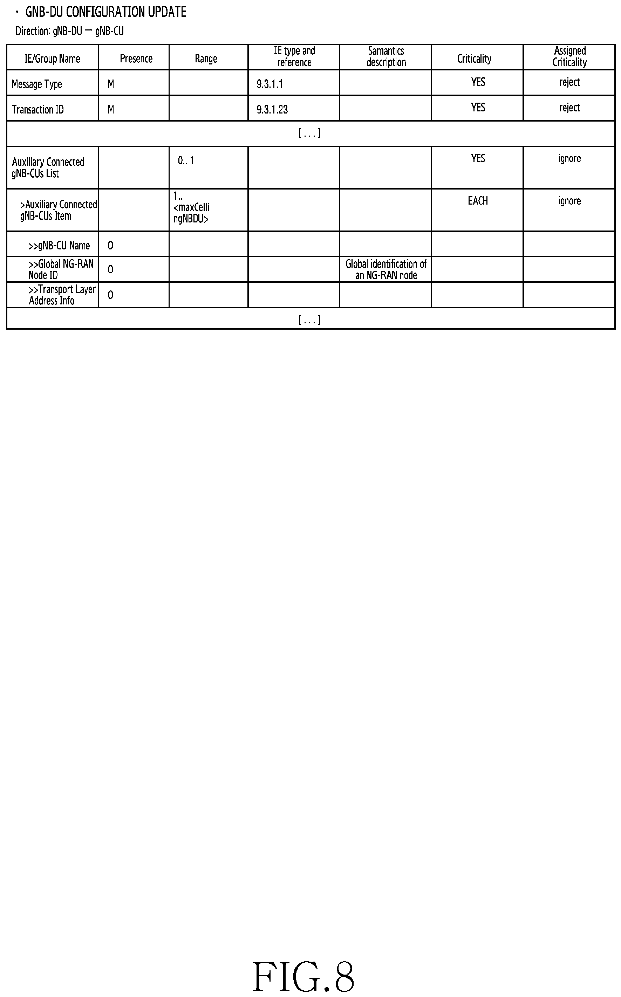

FIG. 8 is a diagram illustrating an example of a configuration of a message used by a DU to transfer modified configuration information of the DU to a CU included in the same base station as that including the DU according to an embodiment of the disclosure.

More specifically, the message configuration of FIG. 8 may be used in operation 4320 in the embodiment of FIG. 4.

The message name or IE names used in FIG. 8 correspond to an embodiment, and may be configured as other names or as configurations or values in other forms having the same purpose.

FIG. 8 illustrates an example of a configuration of a DU configuration information modification (gNB-DU CONFIGURATION UPDATE) message for transferring modified configuration information of a DU to a CU. According to an embodiment of the disclosure, the DU configuration information modification (gNB-DU CONFIGURATION UPDATE) message may include a message type IE used to distinguish message types and a transaction ID IE used to distinguish message transactions.

In addition, according to an embodiment of the disclosure, the DU configuration information modification (gNB-DU CONFIGURATION UPDATE) message may include an auxiliary connected gNB-CUs list IE including CU information on other base station CUs for which the CU has completed auxiliary connection establishment (setup). The auxiliary connected gNB-CUs list IE may include, for each CU/corresponding to each CU, a gNB-CU name IE indicating a name of the CU, a global NG-RAN node ID IE including identifier information of the base station, and a transport layer address info IE including information on a transport layer address (e.g., an IP address or a port number) available for an F1 connection.

According to an embodiment of the disclosure, the DU configuration information modification (gNB-DU CONFIGURATION UPDATE) message may further include other necessary IEs.

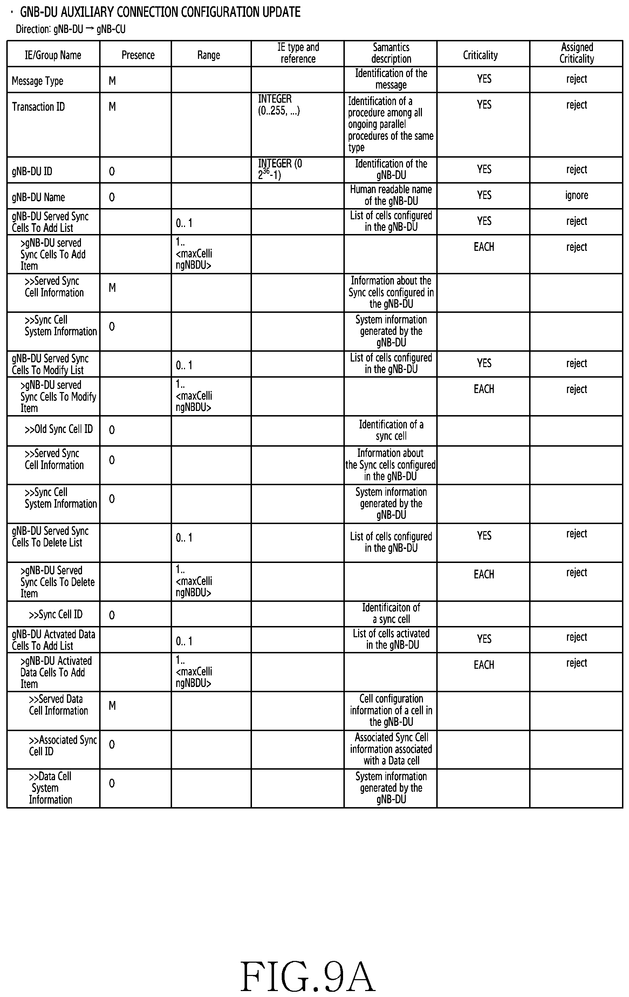

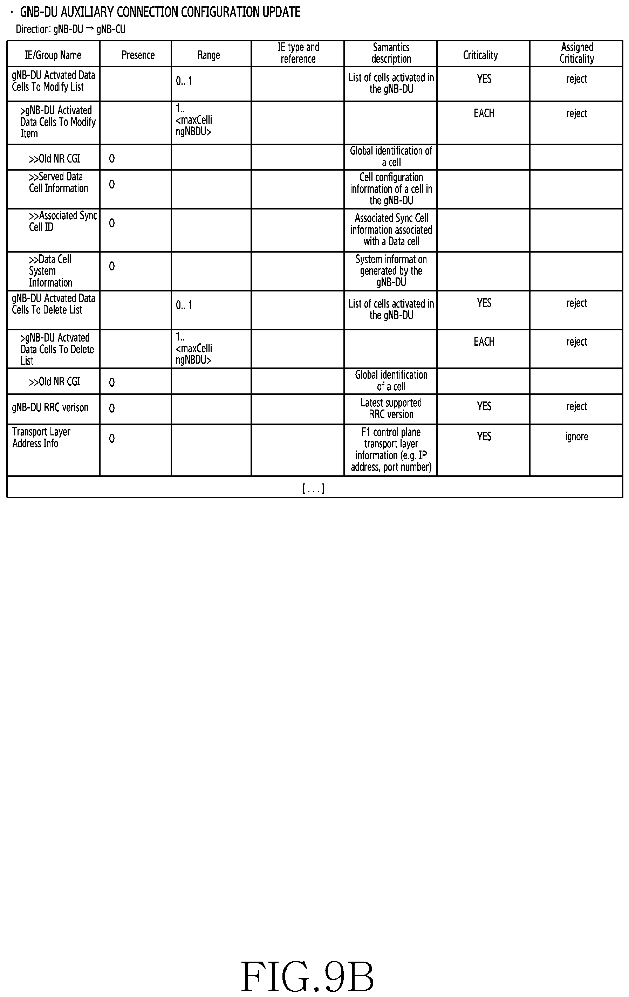

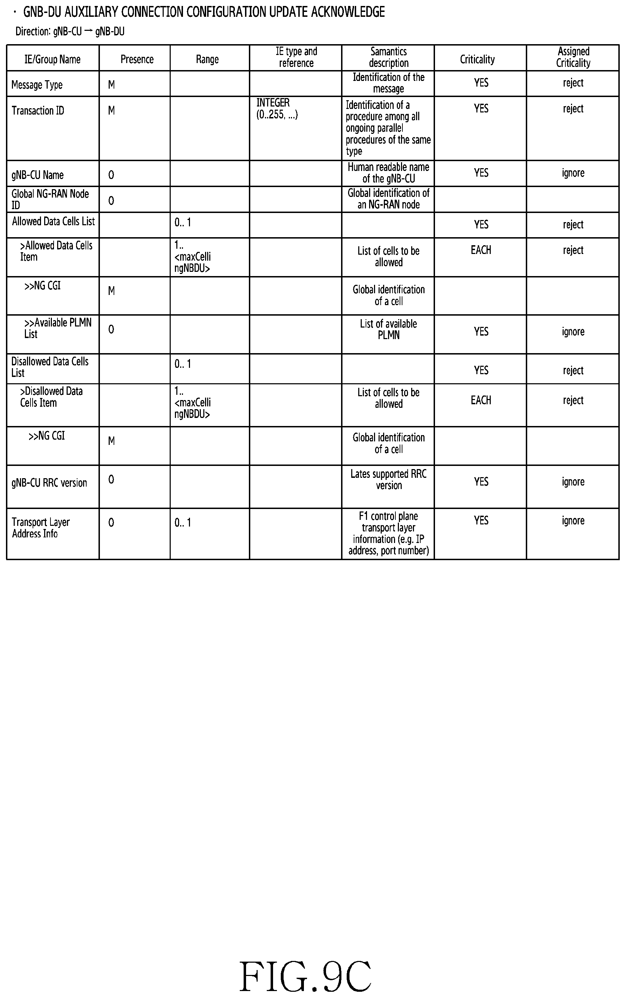

FIG. 9A, FIG. 9B, and FIG. 9C are diagrams illustrating an example of configurations of messages used by a DU to transfer modified configuration information of the DU to a CU included in a base station different from that including the DU according to an embodiment of the disclosure.

More specifically, the message configurations of FIG. 9A, FIG. 9B, and FIG. 9C may be used in operation 4410 and operation 4420 in the embodiment of FIG. 4.

The message names or IE names used in FIG. 99A, FIG. 9B, and FIG. 9C correspond to an embodiment, and may be configured as other names or as configurations or values in other forms having the same purpose, and the information and IEs included in FIG. 9 may be additionally supported in a message that has been used.

FIG. 9A and FIG. 9B illustrate an example of a configuration of a DU auxiliary connection configuration information modification (gNB-DU AUXILIARY CONNECTION CONFIGURATION UPDATE) message used by a DU to transmit modified configuration information of the DU to a CU of a different base station.

According to an embodiment of the disclosure, the DU auxiliary connection configuration information modification (gNB-DU AUXILIARY CONNECTION CONFIGURATION UPDATE) message of FIG. 9A and FIG. 9B may include a message type IE used to distinguish message types, a transaction ID IE used to distinguish message transactions, a gNB-DU ID IE including identifier information of the DU, and a gNB-DU name IE indicating a name of the DU.

In addition, according to an embodiment of the disclosure, the DU auxiliary connection configuration information modification (gNB-DU AUXILIARY CONNECTION CONFIGURATION UPDATE) message may include a gNB-DU served sync cells to add list IE including pieces of information on added sync cells that are activated and are being operated by the DU. The gNB-DU served sync cells to add list IE may include, for each sync cell/corresponding to each sync cell, a served sync cell information IE including sync cell information and a sync cell system information IE including system information generated by the DU for the corresponding sync cell.

In addition, according to an embodiment of the disclosure, the DU auxiliary connection configuration information modification (gNB-DU AUXILIARY CONNECTION CONFIGURATION UPDATE) message may include a gNB-DU served sync cells to modify list IE including pieces of information on modified sync cells that are activated and are being operated by the DU. The gNB-DU served sync cells to modify list IE may include, for each sync cell/corresponding to each sync cell, a served sync cell information IE including sync cell information and a sync cell system information IE including system information generated by the DU for the corresponding sync cell.

In addition, according to an embodiment of the disclosure, the DU auxiliary connection configuration information modification (gNB-DU AUXILIARY CONNECTION CONFIGURATION UPDATE) message may include a gNB-DU served sync cells to delete list IE including information on sync cells stopped to be operated among sync cells that are activated and are being operated by the DU. The gNB-DU served sync cells to delete list IE may include, for each sync cell/corresponding to each sync cell, a sync cell ID IE indicating sync cell information.

In addition, according to an embodiment of the disclosure, the DU auxiliary connection configuration information modification (gNB-DU AUXILIARY CONNECTION CONFIGURATION UPDATE) message may include a gNB-DU activated data cells to add list IE including pieces of information on added data cells that are activated and are being operated by the DU. The gNB-DU activated data cells to add list IE may include, for each data cell/corresponding to each data cell, a served data cell information IE including data cell information, an associated sync cell IE including information on a sync cell associated with the data cell, and a data cell system information IE including system information generated by the DU for the corresponding data cell.

In addition, according to an embodiment of the disclosure, the DU auxiliary connection configuration information modification (gNB-DU AUXILIARY CONNECTION CONFIGURATION UPDATE) message may include a gNB-DU activated data cells to modify list IE including pieces of information on modified data cells that are activated and are being operated by the DU. The gNB-DU activated data cells to modify list IE may include, for each data cell/corresponding to each data cell, an old NR CGI IE including a cell identifier (cell global identifier) having been being used by the data cell, a served data cell information IE including information on the data cell, an associated sync cell IE including information on a sync cell associated with the data cell, and a data cell system information IE including system information generated by the DU for the corresponding data cell.

In addition, according to an embodiment of the disclosure, the DU auxiliary connection configuration information modification (gNB-DU AUXILIARY CONNECTION CONFIGURATION UPDATE) message may include a gNB-DU activated data cells to delete list IE including information on data cells stopped to be operated among data cells that are activated and are being operated by the DU. The gNB-DU activated data cells to delete list IE may , for each data cell/corresponding to each data cell, an old NR CGI IE including a cell identifier (cell global identifier) having been being used by the data cell.

In addition, according to an embodiment of the disclosure, the DU auxiliary connection configuration information modification (gNB-DU AUXILIARY CONNECTION CONFIGURATION UPDATE) message may include a gNB-DU RRC version IE for transmitting information on an RRC version processable by the DU, and a transport layer address info IE including information on a transport layer address (e.g., an IP address or a port number) available in an F1 connection, and may further include other necessary IEs.

FIG. 9C illustrates an example of a configuration of a DU auxiliary connection configuration information modification identification (gNB-DU AUXILIARY CONNECTION CONFIGURATION UPDATE ACKNOWLEDGE) message transferred by a CU to a DU included in a base station different from that including the CU.

According to an embodiment of the disclosure, the DU auxiliary connection configuration information modification identification (gNB-DU AUXILIARY CONNECTION CONFIGURATION UPDATE ACKNOWLEDGE) message may include a message type IE used to distinguish message types, a transaction ID IE used to distinguish message transactions, a gNB-CU name IE indicating a name of the CU, and a global NG-RAN node ID IE including identifier information of a base station.

In addition, according to an embodiment of the disclosure, the DU auxiliary connection configuration information modification identification (gNB-DU AUXILIARY CONNECTION CONFIGURATION UPDATE ACKNOWLEDGE) message may include an allowed data cells list IE including information on a data cell allowed to be connected to the CU and used among data cells that are activated and are being used by the DU. The allowed data cells list IE may include, for each data cell/corresponding to each data cell, a NR CGI IE including a cell identifier (cell global identifier) to be used by the corresponding data cell, and an available PLMN list IE including information on an operator network (public land mobile network (PLMN)) available in the cell.

In addition, according to an embodiment of the disclosure, the DU auxiliary connection configuration information modification identification (gNB-DU AUXILIARY CONNECTION CONFIGURATION UPDATE ACKNOWLEDGE) message may include a disallowed data cells list IE including information on a data cell not allowed to be connected to the CU and used among data cells that are activated and are being used by the DU. The disallowed data cells list IE may include, for each data cell/corresponding to each data cell, an NR CGI IE including a cell identifier (cell global identifier) to be used by the data cell.

In addition, according to an embodiment of the disclosure, the DU auxiliary connection configuration information modification identification (gNB-DU AUXILIARY CONNECTION CONFIGURATION UPDATE ACKNOWLEDGE) message may include a gNB-CU RRC version IE for transmitting information on an RRC version processable by the CU, and a transport layer address info IE including information on a transport layer address (e.g., an IP address or a port number) available in an F1 connection.

In addition, according to an embodiment of the disclosure, the DU auxiliary connection configuration information modification identification (gNB-DU AUXILIARY CONNECTION CONFIGURATION UPDATE ACKNOWLEDGE) message may further include other necessary IEs.

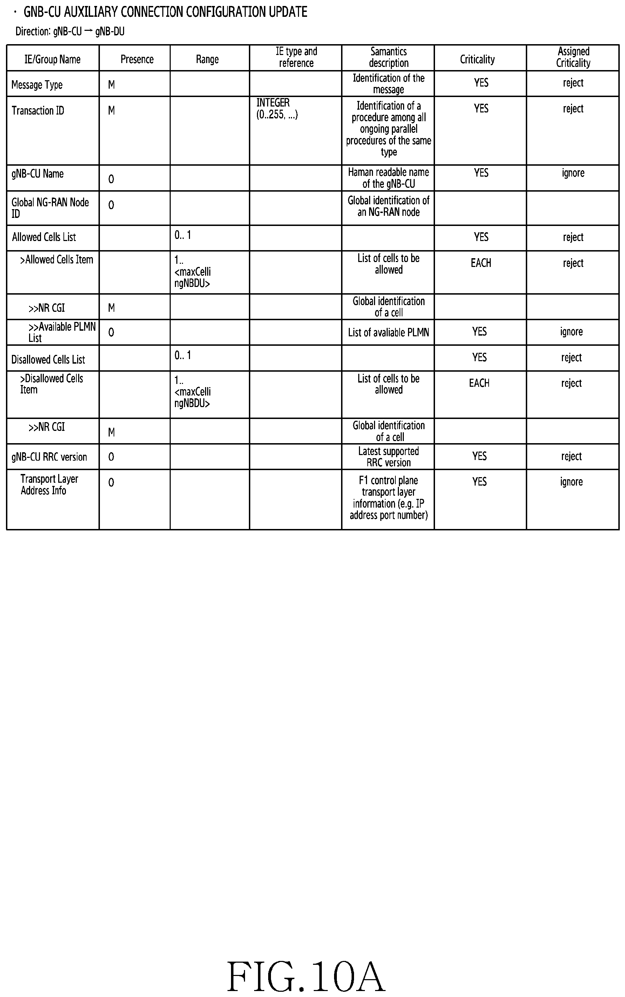

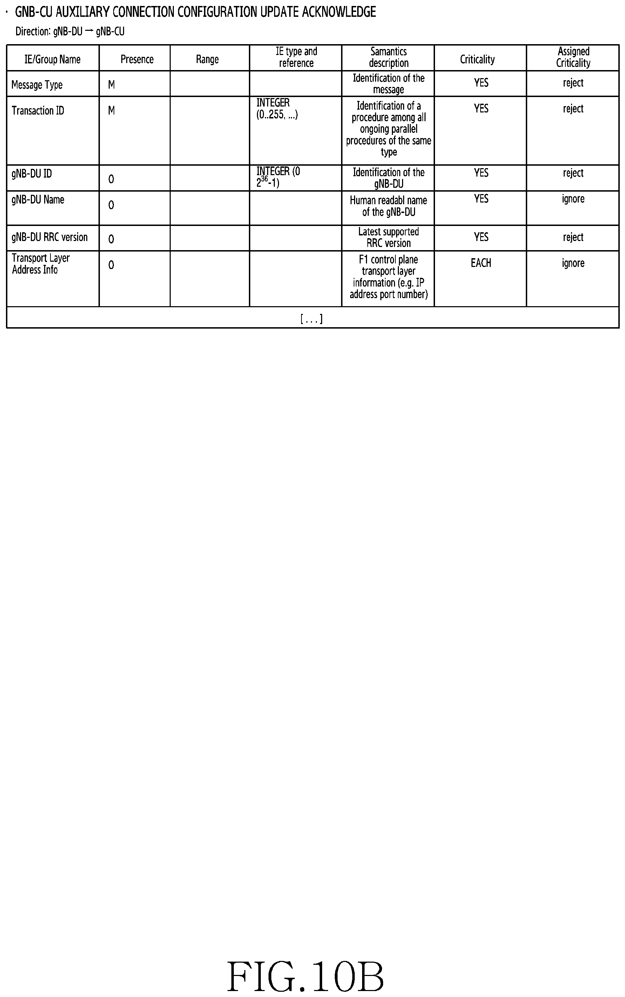

FIG. 10A and FIG. 10B is a diagram illustrating an example of configurations of messages used by a CU to transfer modified configuration information of the CU to a DU of a base station different from that including the CU.

More specifically, the message configurations of FIG. 10A and FIG. 10B may be used in operation 4510 and operation 4520 in the embodiment of FIG. 4.

The message names or IE names used in FIG. 10A and FIG. 10B correspond to an embodiment, and may be configured as other names or as configurations or values in other forms having the same purpose, and the information and IEs included in FIG. 10 may be additionally supported in a message that has been used.

FIG. 10A illustrates an example of a configuration of a CU auxiliary connection configuration information modification (gNB-CU AUXILIARY CONNECTION CONFIGURATION UPDATE) message used by a CU to transmit modified configuration information of the CU to a DU of a different base station.

According to an embodiment of the disclosure, the CU auxiliary connection configuration information modification (gNB-CU AUXILIARY CONNECTION CONFIGURATION UPDATE) message may include a message type IE used to distinguish message types, a transaction ID IE used to distinguish message transactions, a gNB-CU name IE indicating a name of the CU, and a global NG-RAN node ID IE including identifier information of a base station.

In addition, according to an embodiment of the disclosure, the CU auxiliary connection configuration information modification (gNB-CU AUXILIARY CONNECTION CONFIGURATION UPDATE) message may include an allowed data cells list IE including information on a data cell allowed to be connected to the CU and used among data cells that are activated and are being used by the DU. The allowed data cells list IE may include, for each data cell/corresponding to each data cell, a NR CGI IE including a cell identifier (cell global identifier) to be used by the corresponding data cell, and an available PLMN list IE including information on an operator network (public land mobile network (PLMN)) available in the cell.

In addition, according to an embodiment of the disclosure, the CU auxiliary connection configuration information modification (gNB-CU AUXILIARY CONNECTION CONFIGURATION UPDATE) message may include a disallowed data cells list IE including information on a data cell not allowed to be connected to the CU and used among data cells that are activated and are being used by the DU. The disallowed data cells list IE may include, for each data cell/corresponding to each data cell, an NR CGI IE including a cell identifier (cell global identifier) to be used by the data cell.

In addition, according to an embodiment of the disclosure, the CU auxiliary connection configuration information modification (gNB-CU AUXILIARY CONNECTION CONFIGURATION UPDATE) message may include a gNB-CU RRC version IE for transmitting information on an RRC version processable by the CU, and a transport layer address info IE including information on a transport layer address (e.g., an IP address or a port number) available in an F1 connection.

In addition, according to an embodiment of the disclosure, the CU auxiliary connection configuration information modification (gNB-CU AUXILIARY CONNECTION CONFIGURATION UPDATE) message may further include other necessary IEs.

FIG. 10B illustrates an example of a configuration of a CU auxiliary connection configuration information modification identification (gNB-CU AUXILIARY CONNECTION CONFIGURATION UPDATE ACKNOWLEDGE) message transferred by a DU to a CU included in a base station different from that including the DU. According to an embodiment of the disclosure, the CU auxiliary connection configuration information modification identification (gNB-CU AUXILIARY CONNECTION CONFIGURATION UPDATE ACKNOWLEDGE) message may include a message type IE used to distinguish message types, a transaction ID IE used to distinguish message transactions, a gNB-DU ID IE including identifier information of the DU, and a gNB-DU name IE indicating a name of the DU.

In addition, according to an embodiment of the disclosure, the CU auxiliary connection configuration information modification identification (gNB-CU AUXILIARY CONNECTION CONFIGURATION UPDATE ACKNOWLEDGE) message may include a gNB-DU RRC version IE for transmitting information on an RRC version processable by the DU, and a transport layer address info IE including information on a transport layer address (e.g., an IP address or a port number) available in an F1 connection, and may further include other necessary IEs.

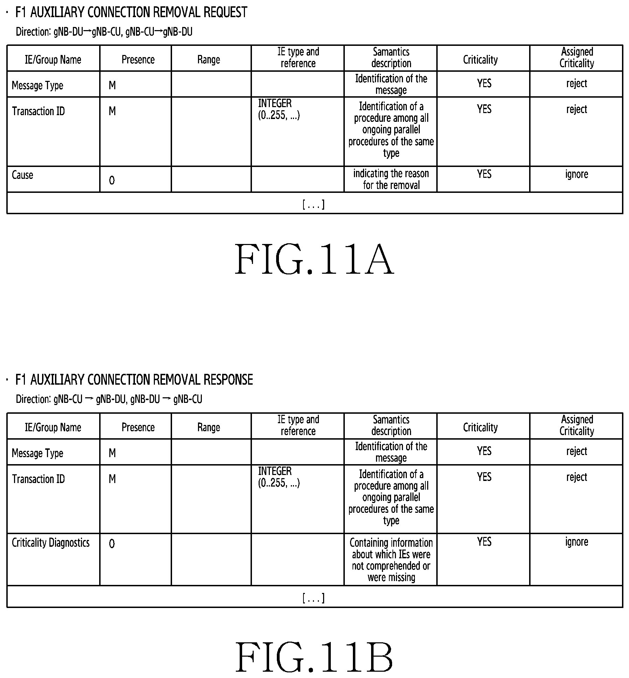

FIGS. 11A and 11B are diagrams illustrating an example of configurations of messages used by a CU or DU to transfer information for releasing a F1 auxiliary connection to a DU or CU included in a base station different from that including the CU or DU according to an embodiment of the disclosure.

More specifically, the message configurations of FIGS. 11A and 11B may be used in operation 4710 (F1 auxiliary connection removal) in the embodiment of FIG. 4.

The message names or IE names used in FIGS. 11A and 11B correspond to an embodiment, and may be configured as other names or as configurations or values in other forms having the same purpose, and an indicator indicating an F1 auxiliary connection interface may be additionally supported in a message that has been used.

FIG. 11A illustrates an example of a configuration of an F1 auxiliary connection release request (F1 AUXILIARY CONNECTION REMOVAL REQUEST) message transferred by a CU or DU to a DU or CU included in a base station different from that including the CU or DU.

According to an embodiment of the disclosure, the F1 auxiliary connection release request (F1 AUXILIARY CONNECTION REMOVAL REQUEST) message may include a message type IE used to distinguish message types, a transaction ID IE used to distinguish message transactions, and a cause IE including information on a cause of requesting F1 auxiliary connection release, and further include other necessary IEs.

FIG. 11B illustrates an example of a configuration of an F1 auxiliary connection release response (F1 AUXILIARY CONNECTION REMOVAL RESPONSE) message transferred by a CU or DU to a DU or CU included in a base station different from that including the CU or DU.

According to an embodiment of the disclosure, the F1 auxiliary connection release response (F1 AUXILIARY CONNECTION REMOVAL RESPONSE) message may include a message type IE used to distinguish message types, a transaction ID IE used to distinguish message transactions, and a criticality diagnostics IE for procedure error management, and further include other necessary IEs.

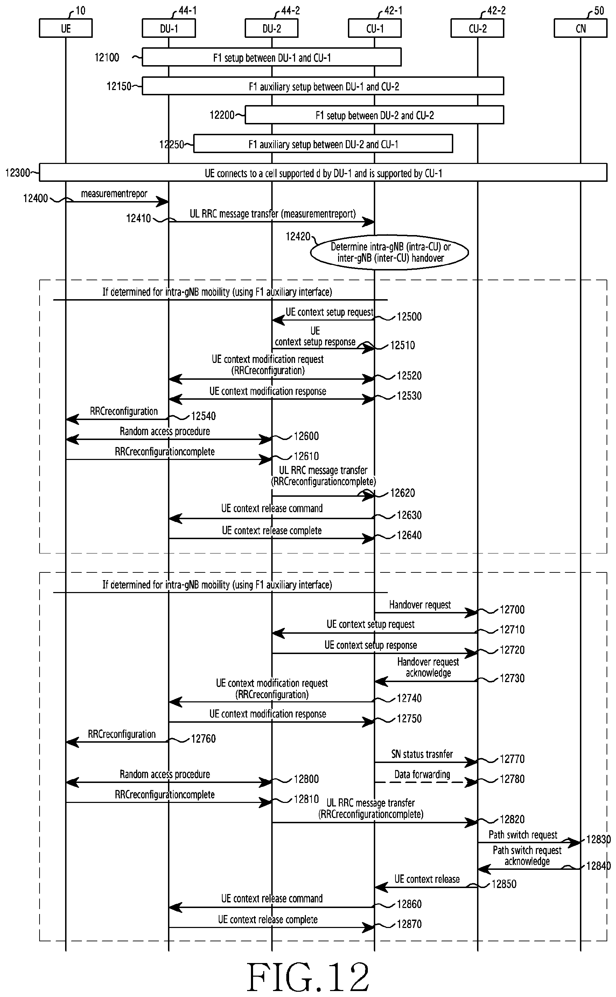

FIG. 12 illustrates an example of a process of changing a serving cell from a base station connected to a UE in an RRC CONNECTED state to another base station according to an embodiment of the disclosure. According to an embodiment of the disclosure, with reference to FIG. 12, a DU may establish a connection with a CU of the same base station as that including the DU while simultaneously establishing an auxiliary connection with a CU of one or more other base stations. In addition, the CU and the DU may support a serving cell change of the UE by using the auxiliary connection between the CU and the DU when the UE performs a procedure of changing a connected cell.

According to an embodiment of the disclosure, referring to FIG. 12, in operation 12100, DU-1 44-1 may perform an F1 setup request procedure to establish a connection with CU-1 42-1 of the same base station as that including the DU. Operation 12100 in FIG. 12 may follow a procedure from operation 4100 to operation 4230 in FIG. 4. After DU-1 44-1 has completed F1 connection establishment with CU-1 42-1 of the same base station as that including DU-1 44-1, DU-1 44-1 may, in operation 12150, perform an F1 auxiliary connection setup request procedure to establish a connection with CU-2 42-2 of a base station different from that including DU-1 44-1. Operation 12150 in FIG. 12 may follow a procedure from operation 4300 to operation 4330 in FIG. 4. In addition, DU-2 44-2 included in the base station different from that including DU-1 44-1 may, in operation 12200, perform an F1 setup request procedure to establish a connection with CU-2 42-2 of the same base station as that including DU-2 44-2. In addition, after DU-2 44-2 has completed F1 connection establishment with CU-2 42-2 of the same base station as that including DU-2 44-2, DU-2 44-2 may, in operation 12250, perform an F1 auxiliary connection setup request procedure to establish a connection with CU-1 42-1 of the different base station.

According to an embodiment of the disclosure, in operation 12300, a UE 10 may be connected to a cell supported by DU-1 44-1 through a series of procedures and be in an RRC connected state for CU-1 42-1. According to an indication from CU-1 42-1, the UE 10 may perform a radio measurement operation and then, in operation 12400, the UE 10 may transmit a radio measurement report message to a base station. In operation 12400, the radio measurement report message transmitted by the UE 10 may be transmitted to DU-1 44-1, and in operation 12410, DU-1 44-1 may transfer the RRC message transmitted by the UE 10 to CU-1 42-1 by using an UL RRC message transfer message. CU-1 42-1 having received the radio measurement report message from the UE 10 through DU-1 44-1 may, in operation 12420, determine whether to change the cell of the UE and a cell change method by using at least a part of the following information in addition to radio measurement result information of the UE.
- Whether to establish an auxiliary connection interface (auxiliary connection setup)with the corresponding DU
- Information on a PDU session currently being provided to the UE, and a service type and QoS information of a bearer and a QoS flow
- A load state of the current serving cell, a neighboring cell, and neighboring base stations (CU and DU)
- Movement prediction information on the UE
- Other information used to determine the cell change or handover

According to an embodiment, when, in operation 12420, CU-1 42-1 determines to change the serving cell of the UE 10 from the cell supported by DU-1 44-1 to a cell supported by DU-2 44-2, and determines to perform a procedure of changing the serving cell of the UE 10 through an interface established through an F1 auxiliary connection setup procedure between CU-1 42-1 and DU-2 44-2, CU-1 42-1 may, in operation 12500, transmit, to DU-2 44-2, a UE context setup request message that requests DU-2 44-2 to configure context for the UE. After DU-2 44-2 having received the UE context setup request message through the F1 auxiliary connection interface from CU-1 42-1 performs an internal configuration and processing operation, DU-2 44-2 may, in operation 12510, transmit a UE context setup response message to CU-1 42-1. After CU-1 42-1 completes a UE context setup procedure with DU-2 44-2, CU-1 42-1 may generate an RRC message to be transmitted to the UE 10 and then, in operation 12520, transmit, to DU-1 44-1, a UE context modification request message including the RRC message to be transmitted to the UE 10. After DU-1 44-1 having received the UE context modification request message from CU-1 42-1 performs internal configuration and processing, DU-1 44-1 may, in operation 12530, transmit a UE context modification response message to CU-1 42-1 and, in operation 12540, DU-1 44-1 may transmit the RRC message to the UE 10.

According to an embodiment of the disclosure, the UE 10 having received an RRC reconfiguration (RRCreconfiguration) message from the base station in operation 12540 may, in operation 12600, perform a random access procedure with DU-2 44-2, based on information included in the RRC reconfiguration (RRCreconfiguration) message. When the UE 10 completes the random access procedure in operation 12600, the UE 10 may, in operation 12610, transmit an RRC reconfiguration completion (RRCreconfigurationcomplete) message to DU-2 44-2. In operation 12620, DU-2 44-2 having received the RRC message from the UE 10 transfers the RRC message of the UE 10 to CU-1 42-1. CU-1 42-1 having received the RRC reconfiguration completion (RRCreconfigurationcomplete) message from the UE 10 may, in operation 12360, transmit a UE context release command message to DU-1 44-1. After DU-1 44-1 having received the UE context release command message from CU-1 42-1 releases the context of the UE 10 and performs internal processing, DU-1 44-1 may, in operation 12640, transmit a UE context release completion (UE context release complete) message to CU-1 42-1.

According to an embodiment of the disclosure, when, in operation 12420, CU-1 42-1 determines to change the serving cell of the UE 10 from the cell supported by DU-1 44-1 to the cell supported by DU-2 44-2, and determines to perform a procedure of changing the serving cell of the UE 10 through an inter-base station handover procedure, CU-1 42-1 may, in operation 12700, transmit a handover request message through an inter-base station interface, such as Xn, to a target base station including DU-2 44-2 supporting the target cell or CU-2 42-2 of the target base station. CU-2 42-2 having received the handover request message from CU-1 42-1 may, in operation 12710, transmit a UE context setup request message that requests DU-2 44-2 to configure context of the UE 10, to DU-2 44-2 supporting the target cell. After DU-2 44-2 having received the UE context setup request message from CU-2 42-2 performs an internal configuration and processing operation, DU-2 44-2 may, in operation 12720, transmit a UE context setup response message to CU-2 42-2. After CU-2 42-2 has received the UE context setup response message from DU-2 44-2, CU-2 42-2 may, in operation 12730, transmit a handover request identification (Handover request acknowledge) message to CU-1 42-1. CU-1 42-1 having received the handover request identification (Handover request acknowledge) message from CU-2 42-2 may generate an RRC message to be transmitted to the UE 10 and then, in operation 12740, transmit, to DU-1 44-1, a UE context modification request message including the RRC message to be transmitted to the UE 10. DU-1 44-1 having received the UE context modification request message from CU-1 42-1 may perform internal configuration and processing, then, in operation 12750, transmit a UE context modification response message to CU-1 42-1 and, in operation 12760, transmit the RRC message to the UE 10. CU-1 42-1 having received the UE context modification response message from DU-1 44-1 in operation 12750 may, when data forwarding to CU-2 42-2 is required, in operation 12770, transmit, to CU-2 42-2, an SN status transfer message including information such as a PDCP sequence number (SN) related to data forwarding, and, at the same time, in operation 12780, CU-1 42-1 may perform data forwarding to CU-2 42-2 for transfer of user data of the UE.

According to an embodiment of the disclosure, the UE 10 having received an RRC reconfiguration (RRCreconfiguration) message from the base station in operation 12760 may, in operation 12800, perform a random access procedure with DU-2 44-2, based on information included in the RRC reconfiguration (RRCreconfiguration) message. When the UE 10 completes the random access procedure in operation 800, the UE 10 may, in operation 12810, transmit an RRC reconfiguration completion (RRCreconfigurationcomplete) message to DU-2 44-2. DU-2 44-2 having received the RRC message from the UE 10 transfers the RRC message of the UE to CU-2 42-2 in operation 12820. CU-2 42-2 having received, from DU-2 44-2, the RRC reconfiguration completion (RRCreconfigurationcomplete) message transmitted by the UE may, in operation 12830, transmit, to a CN 50, a path switch request message for a path switch between the base station and the core network for the UE. Thereafter, in operation 12840, the CN 50 may transmit a path switch request identification (Path switch request acknowledge) message to CU-2 42-2. In operation 12850, CU-2 42-2 may transmit, to CU-1 42-1, a UE context release message indicating that release of the context of the UE is allowed. CU-1 42-1 having received the UE context release message from CU-2 42-2 may transmit a UE context release command message to DU-1 44-1. After DU-1 44-1 having received the UE context release command message from CU-1 42-1 releases the context of the UE and performs internal processing, DU-1 44-1 may, in operation 12870, transmit a UE context release completion (UE context release complete) message to CU-1 42-1, and CU-1 42-1 having received the UE context release completion (UE context release complete) message from DU-1 44-1 may release the context of the UE 10.

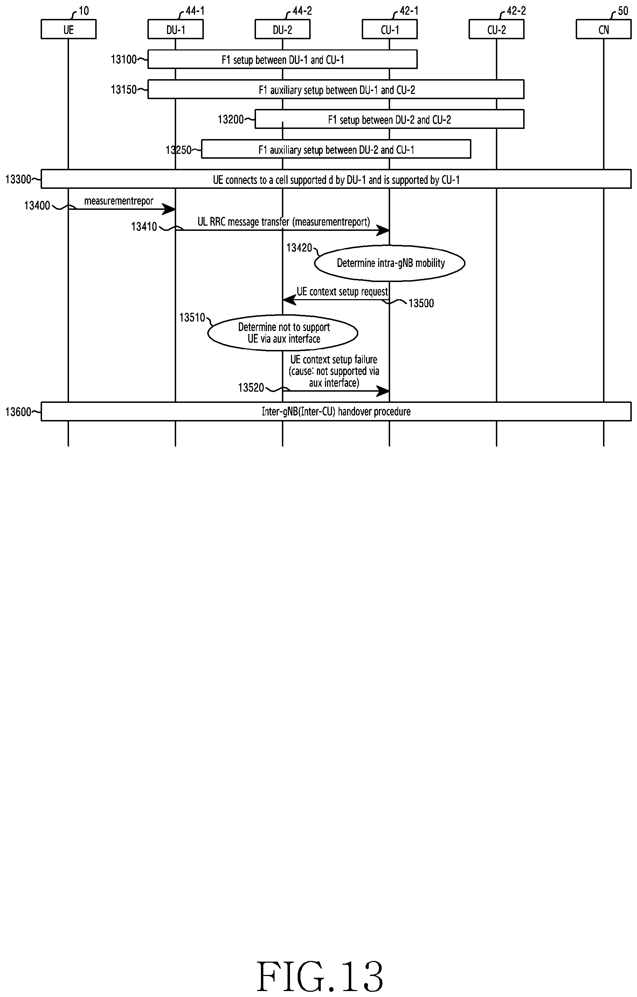

FIG. 13 illustrates an example of a process of changing a serving cell from a base station connected to a UE in an RRC CONNECTED state to another base station according to an embodiment of the disclosure. According to an embodiment of the disclosure, with reference to FIG. 13, if support for a serving cell change of a UE using an auxiliary connection between a CU and a DU fails, a serving cell change of the UE may be supported through an inter-base station handover procedure.

According to an embodiment of the disclosure, referring to FIG. 13, in operation 13100, DU-1 44-1 may perform an F1 setup request procedure to establish a connection with CU-1 42-1 of the same base station as that including DU-1 44-1. Operation 13100 in FIG. 13 may follow a procedure from operation 4100 to operation 4230 in FIG. 4. After DU-1 44-1 has completed F1 connection establishment with CU-1 42-1 of the same base station as that including DU-1 44-1, DU-1 44-1 may, in operation 13150, perform an F1 auxiliary connection setup request procedure to establish a connection with CU-2 42-2 of a base station different from that including DU-1 44-1. Operation 13150 in FIG. 13 may follow a procedure from operation 4300 to operation 4330 in FIG. 4. In addition, DU-2 44-2 included in the base station different from that including DU-1 44-1 may, in operation 13200, perform an F1 setup request procedure to establish a connection with CU-2 42-2 of the same base station as that including DU-2 44-2. In addition, after DU-2 44-2 has completed F1 connection establishment with CU-2 42-2 of the same base station as that including DU-2 44-2, DU-2 44-2 may, in operation 13250, perform an F1 auxiliary connection setup request procedure to establish a connection with CU-1 42-1 of a base station different from that including DU-2 44-2.

According to an embodiment of the disclosure, in operation 13300, a UE 10 may be connected to a cell supported by DU-1 44-1 through a series of procedures and be in an RRC connected state for CU-1 42-1. According to an indication from CU-1 42-1, the UE 10 may perform a radio measurement operation and then, the UE 10 may, in operation 13400, transmit a radio measurement report message to a base station. In operation 13400, the radio measurement report message transmitted by the UE 10 may be transmitted to DU-1 44-1, and DU-1 44-1 may, in operation 13410, transfer the RRC message transmitted by the UE 10 to CU-1 42-1 by using an UL RRC message transfer message. CU-1 42-1 having received the radio measurement report message from the UE 10 through DU-1 44-1 may, in operation 13420, determine whether to change the cell of the UE and a cell change method by using the following information in addition to radio measurement result information of the UE.
- Whether to establish an auxiliary connection interface (auxiliary connection setup)with the corresponding DU
- Information on a PDU session currently being provided to the UE, and a service type and QoS information of a bearer and a QoS flow
- A load state of the current serving cell, a neighboring cell, and neighboring base stations (CU and DU)
- Movement prediction information on the UE
- Other information used to determine the cell change or handover

According to an embodiment, when, in operation 13420, CU-1 42-1 determines to change the serving cell of the UE 10 to a cell supported by DU-2 44-2, and determines to perform a procedure of changing the serving cell of the UE 10 through an interface established through an F1 auxiliary connection setup procedure between CU-1 42-1 and DU-2 44-2, CU-1 42-1 may, in operation 13500, transmit, to DU-2 44-2, a UE context setup request message that requests DU-2 44-2 to configure context for the UE. When DU-2 44-2 receives the UE context setup request message from CU-1 42-1 through an F1 auxiliary connection interface, DU-2 44-2 may, in operation 13510, determine that DU-2 is not able to support a serving cell change of the UE using the F1 auxiliary connection interface. DU-2 44-2 may determine that DU-2 is not able to support a serving cell change of the UE using the F1 auxiliary connection interface, by using at least a part of the following information.
- A load status of the DU
- The number of UEs being served using the F1 auxiliary connection interface, the number of bearers, and a load amount (load)
- A policy configured by other operators or an operation and management (OAM)

According to an embodiment of the disclosure, when DU-2 44-2 is not able to support a serving cell change of the UE using the F1 auxiliary connection interface, DU-2 44-2 may, in operation 13520, transmit a UE context setup failure message to CU-1 42-1, and the UE context setup failure message may include information on a cause indicating that the serving cell change of the UE 10 using the auxiliary connection interface is unsupportable. CU-1 42-1 having received the UE context setup failure message from DU-2 44-2 may, according to an internal determination, in operation 13600, perform a serving cell change of the UE through a handover procedure with the target base station. Operation 13600 in FIG. 13 may follow a procedure from operation 12700 to operation 12870 in FIG. 12.

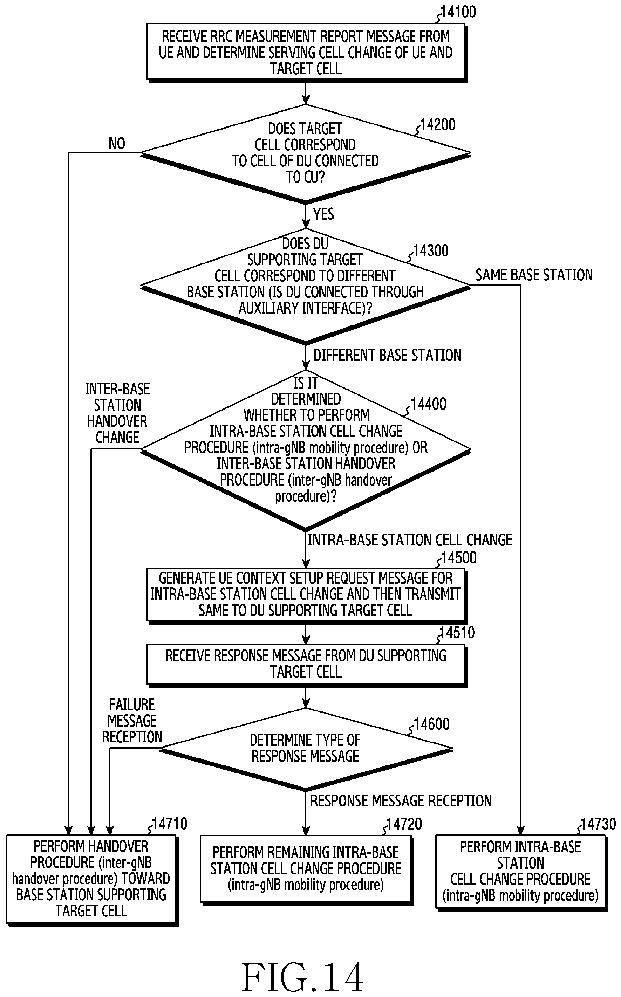

FIG. 14 illustrates an example of a determination by a CU for a serving cell change of a UE in an RRC CONNECTED state at the CU, and a relevant process according to an embodiment of the disclosure.

According to an embodiment of the disclosure, referring to FIG. 14, in operation 14100, a CU having received an RRC measurement report message from a UE may determine a serving cell change of the UE and determine a corresponding target cell, whereby this procedure is started.

According to an embodiment of the disclosure, in operation 14200, the CU may determine whether the determined target cell is a cell supported by a DU currently being connected to the CU. When it is determined in operation 14200 that the target cell is not a cell supported by a DU currently being connected to the CU, the CU may, in operation 14710, an inter-base station handover procedure toward a base station supporting the target cell.

According to an embodiment of the disclosure, when it is determined in operation 14200 that the target cell is a cell supported by a DU currently being connected to the CU, the CU may, in operation 14300, identify whether the DU supporting the target cell is a DU of a different base station (whether the DU is connected through an auxiliary connection interface). When it is identified in operation 14300 that the DU supporting the target cell is a DU of the same base station (i.e., the DU is not connected through an auxiliary connection interface), the CU may, in operation 14730, perform an intra-base station cell change procedure toward the DU supporting the target cell.

According to an embodiment of the disclosure, when it is identified in operation 14300 that the DU supporting the target cell is a DU of a different base station (i.e., the DU is connected through an auxiliary connection interface), the CU may, in operation 14400, determine whether to perform an intra-base station cell change procedure or an inter-base station handover procedure for a serving cell change of the UE. When it is determined in operation 14400 to perform an inter-base station handover procedure, the CU may, in operation 14710, perform the inter-base station handover procedure toward the base station supporting the target cell.

According to an embodiment of the disclosure, when it is determined in operation 14400 to perform an intra-base station cell change procedure, the CU may, in operation 14500, generate a UE context setup request message for an intra-base station cell change and then transmit same to the DU supporting the target cell. In operation 14510, the CU receives a response message from the DU supporting the target cell.

According to an embodiment of the disclosure, in operation 14600, the CU may identify a type of the response message received from the DU supporting the target cell, and then when it is identified that the response message is a failure message, the CU may, in operation 14710, may perform an inter-base station handover procedure toward the base station supporting the target cell.

According to an embodiment of the disclosure, when, in operation 14600, it is identified that the response message is a response message, the CU may, in operation 14720, may perform the remaining procedure for the intra-base station cell change.

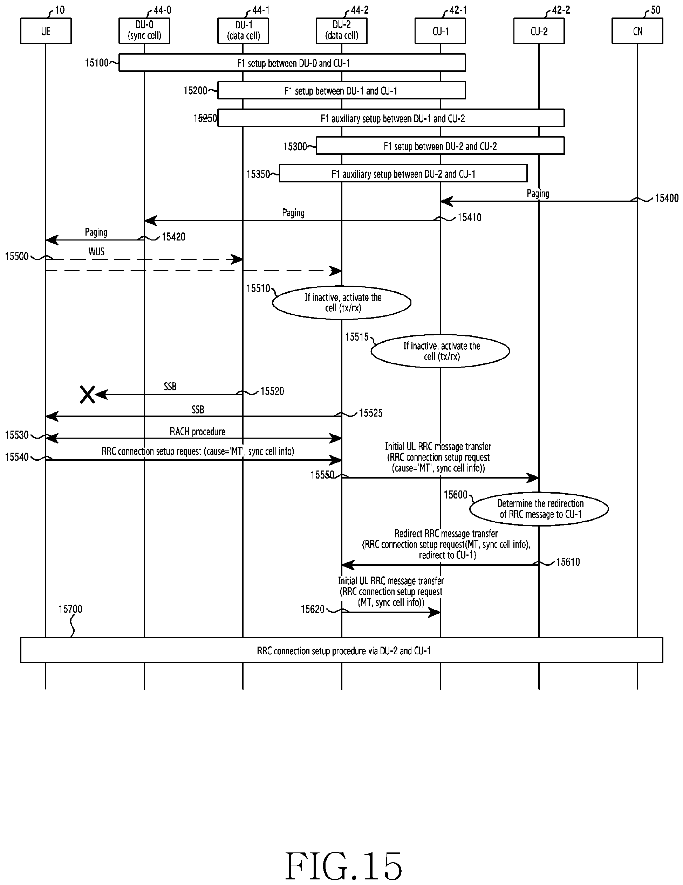

FIG. 15 illustrates an example of a process of paging a UE in an RRC IDLE state or RRC INACTIVE state in an architecture where base station functions are split, and responding to the paging by the UE according to an embodiment of the disclosure.

According to an embodiment of the disclosure, referring to FIG. 15, a UE may receive a paging message through a sync cell, and transmit a response message for the paging and perform a subsequent procedure through a data cell. In FIG. 15, a DU supporting the sync cell may establish a connection with a CU of the same base station as that including the DU, and when a UE paging message is received from the CU, the DU may transmit the paging message to the UE, based on the sync cell. In FIG. 15, a DU supporting the data cell may establish a connection with a CU of the same base station as that including the DU while simultaneously establishing auxiliary connections with CUs of one or more other base stations, and may redirect a paging response message of the UE and perform a subsequent RRC connection procedure of the UE through an auxiliary connection interface (an auxiliary connection).

According to an embodiment of the disclosure, referring to FIG. 15, in operation 15100, DU-0 44-0 supporting a sync cell may perform an F1 setup request procedure to establish a connection with CU-1 42-1 of the same base station as that including DU-0 44-0, and perform configuration for sync cell support. In operation 15200, DU-1 44-1 may perform an F1 setup request procedure to establish a connection with CU-1 42-1 of the same base station as that including DU-1 44-1. Operation 15200 in FIG. 15 may follow a procedure from operation 4100 to operation 4230 in FIG. 4. After DU-1 44-1 has completed F1 connection establishment with CU-1 42-1 of the same base station as that including DU-1 44-1, DU-1 44-1 may, in operation 15250, perform an F1 auxiliary connection setup request procedure to establish a connection with CU-2 42-2 of a base station different from that including DU-1 44-1. Operation 15250 in FIG. 15 may follow a procedure from operation 4300 to operation 4330 in FIG. 4. In addition, DU-2 44-2 included in the base station different from that including DU-1 44-1 may, in operation 15300, perform an F1 setup request procedure to establish a connection with CU-2 42-2 of the same base station as that of DU-2 44-2. In addition, after DU-2 44-2 has completed F1 connection establishment with CU-2 42-2 of the same base station as that including DU-2 44-2, U-2 44-2 may, in operation 15350, perform an F1 auxiliary connection setup request procedure to establish a connection with CU-1 42-1 of the different base station.

According to an embodiment of the disclosure, in operation 15400, when transmission of a signaling message or user data to a UE in an RRC IDLE state is required, a CN 50 may transmit a paging message to a base station. When a paging message is received from the CN 50 or when transmission of a signaling message or user data to a UE in an RRC INACTIVE state is required, CU-1 42-1 may transmit a paging message to DU-0 44-0 in operation 15410. DU-0 44-0 having received the paging message from CU-1 42-1 may transmit a paging message to the sync cell in operation 15420. A UE 10 having received the paging message in operation 15420 may transmit a wake-up signal (WUS) in operation 15500, if necessary, by using system information already received from the sync cell or information received together with the paging message at the time of receiving the paging message. When a data cell to which the UE 10 transmits the wake-up signal (WUS) is a cell in an inactive state, DU-1 44-1 and DU-2 44-2 operate data cells in the inactive state to be in an active state, as in operation 15510 or operation 15515.

According to an embodiment of the disclosure, when the data cell is already in an active state or enters an active state in operation 15510 or operation 15515, DU-1 44-1 and DU 44-2 may start transmission of an SSB (synchronization signal and physical broadcast channel (SS and PBCH)) signal at the corresponding data cells in operation 15520 and operation 15525, respectively. The SSB signal may include system information transmitted by a corresponding data cell. When in operation 15525, the UE receives an SSB signal transmitted by the data cell of DU-2 44-2, the UE 10 may perform a random access procedure in the data cell of DU-2 44-2 in operation 15530, based on system information included in the SSB signal. When the UE 10 completes the random access procedure in operation 15530, the UE 10 may, in operation 15540, transmit an RRC connection request (RRC connection setup request) message to DU-2 44-2. The RRC connection request (RRC connection setup request) message transmitted by the UE 10 may include information on a cause indicating that the UE requests an RRC connection in response to the paging message and, for example, may include information such as "mobile-terminated (MT)." In addition, the RRC connection request (RRC connection setup request) message transmitted by the UE 10 may include information on the sync cell from which the paging message is received, and in operation 15540, may include information on the sync cell of DU-0 44-0 connected to CU-1 42-1. DU-2 44-2 having received the RRC message from the UE 10 may, in operation 15550, transmit the first RRC message transmitted by the UE 10 to DU-2 44-2 to CU-2 42-2 that is a CU of the same base station as that including DU-2 44-2, and may include the first RRC message of the UE 10 in an initial UL RRC message transfer message and transfer same to CU-2 42-2.

According to an embodiment of the disclosure, CU-2 42-2 having received the first RRC message of the UE 10 from DU-2 44-2 may decode the RRC message, and determine a base station required to receive the RRC message transmitted by the UE 10 by using the information on the cause of requesting the RRC connection and the information on the sync cell, which are included in the RRC connection request (RRC connection setup request) message. When, in operation 15600, CU-2 42-2 determines that the sync cell included in the information on sync cell is a sync cell managed by the CU-1 42-1, and determines to redirect the RRC message transmitted by the UE 10 to CU-1 42-1, the CU-2 42-2 may, in operation 16610, transmit a redirect RRC message transfer message to DU-2 44-2, while including, in the redirect RRC message transfer message, the RRC connection request (RRC connection setup request) message transmitted by the UE 10, and also including information on CU-1 to which the RRC message is required to be transferred. DU-2 44-2 having received the redirect RRC message transfer message from CU-2 42-2 may, in operation 15620, transmit, to CU-1 42-1, an initial UL RRC message transfer message including the RRC connection request (RRC connection setup request) message transmitted by the UE 10, based on the CU information included in the redirect RRC message transfer message.

According to an embodiment of the disclosure, CU-1 42-1 having received, from DU-2 44-2, the initial UL RRC message transfer message including the RRC connection request (RRC connection setup request) message transmitted by the UE 10 may, in operation 15700, a subsequent RRC connection setup procedure with the UE 10-1 through DU-2 44-2.

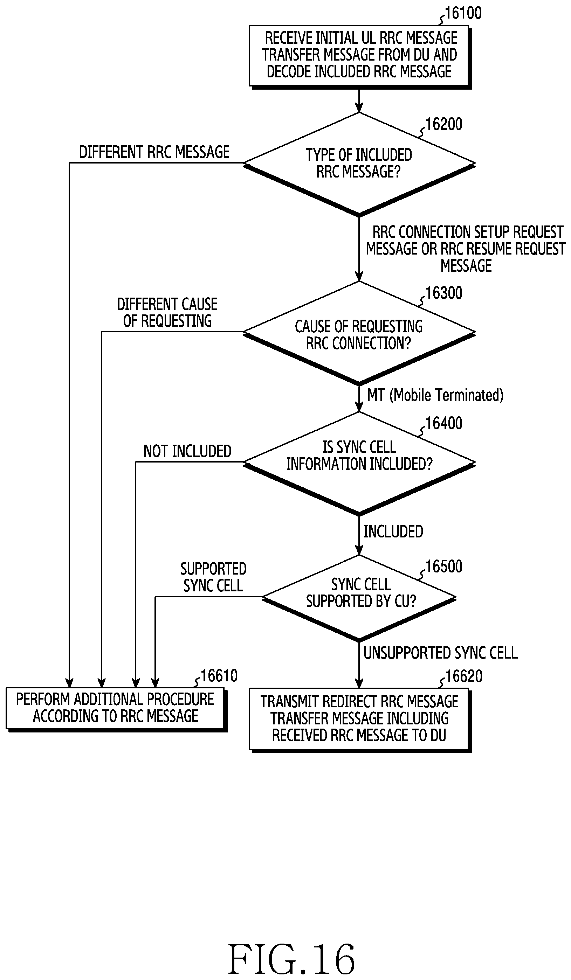

FIG. 16 is a flowchart illustrating an example of processing an initial UL RRC message transfer message by a CU and a relevant process according to an embodiment of the disclosure.

More specifically, FIG. 16 relates to an operation in which when the CU has received an initial UL RRC message transfer message from a DU, the DU processes an RRC message of a UE according to a type of the RRC message type of the UE included in the initial UL RRC message transfer message.

According to an embodiment of the disclosure, referring to FIG. 16, in operation 16100, when a CU receives an initial UL RRC message transfer message from a DU, the CU may decode an RRC message included in the initial UL RRC message transfer message.

According to an embodiment of the disclosure, in operation 16200, the CU may determine the RRC message included in the initial UL RRC message transfer message. In this case, when a type of the RRC message transmitted by the UE is determined as an RRC message other than an RRC connection setup request message or an RRC resume request message, the CU may perform an additional procedure according to the determined type of the RRC message in operation 16610.

According to an embodiment of the disclosure, when a result of the determination in operation 16200 indicates that a type of the RRC message transmitted by the UE is determined as an RRC connection setup request message or an RRC resume request message, the CU may, in operation 300, identify information on a cause of requesting included in the RRC connection setup request message or the RRC resume request message. When the cause of requesting included in the RRC connection setup request message or the RRC resume request message indicates that the message is not transmitted in response to a paging message, for example, when the cause is a cause of requesting other than "mobile terminated (MT)," the CU may perform an additional procedure according to the type of the RRC message in operation 16610.

According to an embodiment of the disclosure, when, in operation 16300, the cause of requesting included in the RRC connection setup request message or the RRC resume request message indicates that the message is transmitted in response to a paging message, for example, when the cause is "mobile terminated (MT)," the CU may, in operation 16400, identify whether the RRC connection setup request message or the RRC resume request message includes sync cell information. When it is identified in operation 16400 that the RRC connection setup request message or the RRC resume request message does not include sync cell information, the CU may perform an additional procedure according to the type of the RRC message in operation 16610.

According to an embodiment, when it is identified in operation 16400 that the RRC connection setup request message or the RRC resume request message includes sync cell information, the CU may, in operation 16500, determine whether a sync cell included in the sync cell information is a sync cell supported by the CU. When, in operation 16500, the sync cell information includes information on a sync cell supported by the CU, the CU may perform an additional procedure according to the type of the RRC message in operation 16610.

According to an embodiment of the disclosure, when, in operation 16500, the sync cell information includes information on a sync cell supported by another CU rather than the information on the sync cell supported by the CU, the CU may, in operation 16620, identify information on the other CU or a base station supporting the sync cell supported by the other CU, and then transmit a redirect RRC message transfer message including the RRC message of the UE having been transferred from the DU, to the DU having transferred the initial UL RRC message transfer message, and the CU may add information on the CU to which the RRC message of the UE is required to be transferred, to the redirect RRC message transfer message.

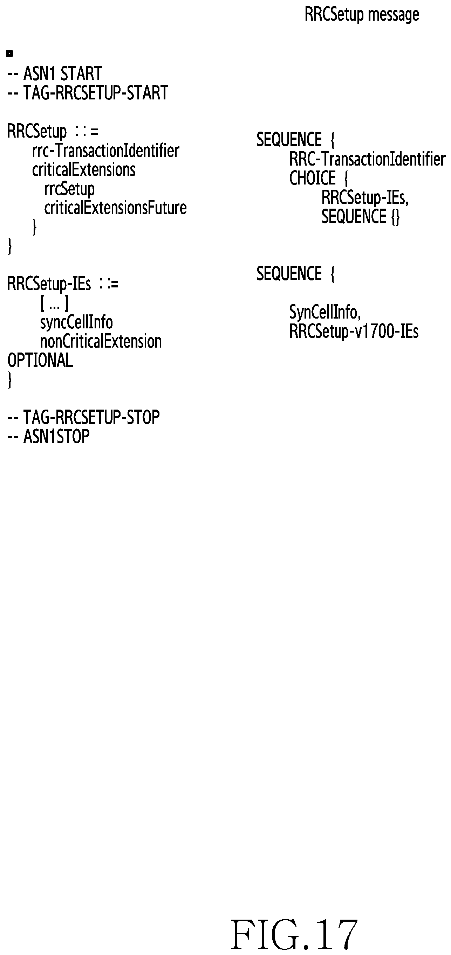

FIG. 17 is a diagram illustrating an example of a configuration of an RRC connection request (RRC connection setup request) message transmitted by a UE in an RRC IDLE state to a base station according to an embodiment of the disclosure.

More specifically, the example of the message configuration of FIG. 17 may be used in operation 15550 in the embodiment of FIG. 15.

The message name or IE names used in FIG. 17 correspond to an embodiment, and may be configured as other names or as configurations or values in other forms having the same purpose. In addition, an RRC resume request message transmitted by a UE in an RRC INACTIVE state to a base station may also include similar information.

According to an embodiment of the disclosure, FIG. 17 illustrates an example of a configuration of an RRCSetup message transmitted by a UE to a base station. The RRCSetup message may include an rrc-TransactionIdentifier IE for distinguishing message transactions, and may include an rrcSetup IE including RRC setup information. The rrcSetup IE may include a syncCellInfo IE including sync cell information. The RRCSetup message may further include other necessary IEs.

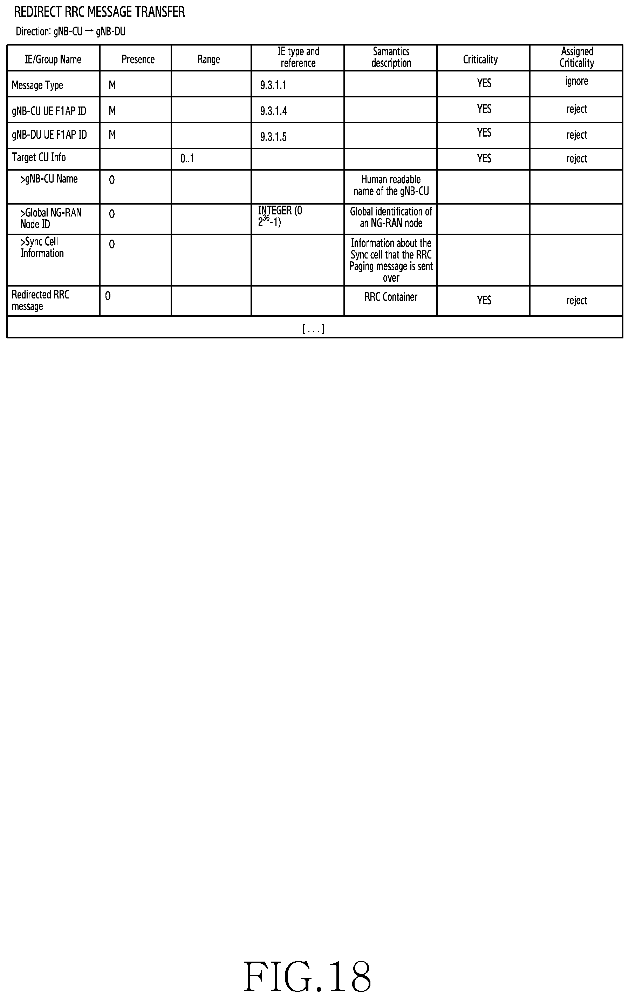

FIG. 18 is a diagram illustrating an example of a configuration of a message used by a CU to request a DU to transfer an RRC message transmitted by a UE to a CU of a different base station according to an embodiment of the disclosure.

The example of the message configuration of FIG. 18 may be used in operation 15610 in the embodiment of FIG. 15.

The message name or IE names used in FIG. 18 correspond to an embodiment, and may be configured as other names or as configurations or values in other forms having the same purpose, and the information and IEs included in FIG. 18 may be additionally supported in a message that has been used.

FIG. 18 illustrates an example of a configuration of a REDIRECT RRC MESSAGE TRANSFER message transmitted by a CU to a DU. According to an embodiment of the disclosure, the REDIRECT RRC MESSAGE TRANSFER message may include a message type IE used to distinguish message types, a transaction ID IE for distinguishing message transactions, a gNB-CU UE F1AP ID IE including identifier information used by the CU to distinguish UEs, and a gNB-DU UE F1AP ID IE including identifier information used by the DU to distinguish UEs.

In addition, according to an embodiment of the disclosure, the REDIRECT RRC MESSAGE TRANSFER message may include a target CU info IE including information on a CU to which an RRC message included in the REDIRECT RRC MESSAGE TRANSFER message is required to be transferred. The target CU info IE may include at least one piece of information among a gNB-CU name IE indicating a name of the CU, a global NG-RAN node ID IE including identifier information of a base station, and a sync cell information IE including sync cell information.

In addition, according to an embodiment of the disclosure, the REDIRECT RRC MESSAGE TRANSFER message may include a redirected RRC message IE including an RRC message transmitted by a UE, and may further include other necessary IEs.

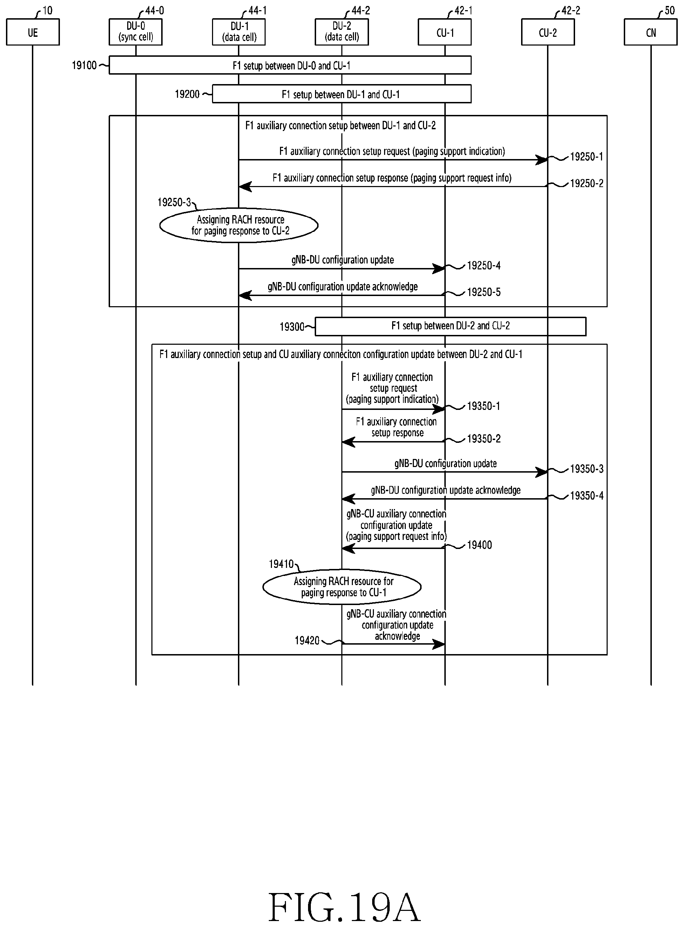

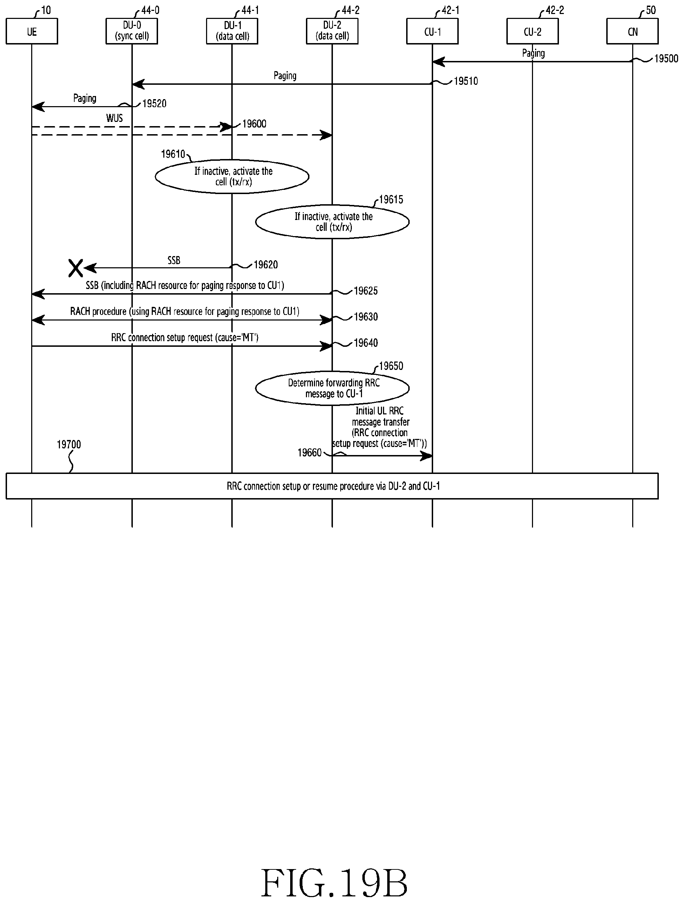

FIG. 19A and FIG. 19B illustrate an example of a process of paging a UE in an RRC IDLE state or RRC INACTIVE state in an architecture in which base station functions are split, and responding to the paging by the UE according to an embodiment of the disclosure. In FIG. 19A and FIG. 19B, a UE may receive a paging message through a sync cell, and transmit a response message for the paging and perform a subsequent procedure through a data cell. In FIG. 19A and FIG. 19B, a DU supporting the sync cell may establish a connection with a CU of the same base station as that including the DU, and when a UE paging message is received from the CU, the DU may transmit the paging message to the UE through the sync cell. In FIG. 19A and FIG. 19B, a DU supporting the data cell may establish a connection with a CU of the same base station as that including the DU while simultaneously establishing auxiliary connections with CUs of one or more other base stations, and may transfer a UE paging-related message or a paging-related response message of the UE and perform a subsequent RRC connection procedure of the UE through an auxiliary connection interface (an auxiliary connection).

According to an embodiment of the disclosure, referring to FIG. 19A, in operation 19100, DU-0 44-0 supporting a sync cell may perform an F1 setup request procedure to establish a connection with CU-1 42-1 of the same base station as that including DU-0 44-0, and perform configuration for sync cell support. In operation 19200, DU-1 44-1 may perform an F1 setup request procedure to establish a connection with CU-1 42-1 of the same base station as that including DU-1 44-1. Operation 19200 in FIG. 19AA may follow a procedure from operation 4100 to operation 4230 in FIG. 4.

According to an embodiment of the disclosure, after DU-1 44-1 has completed F1 connection establishment with CU-1 42-1 of the same base station as that including DU-1 44-1, DU-1 44-1 may, from operation 19250-1 to operation 19250-5, perform an F1 auxiliary connection setup request procedure to establish a connection with CU-2 42-2 of another base station. Operation 19250-1, operation 19250-2, operation 19250-4, and operation 19250-5 of FIG. 19A may follow a procedure including operation 4300, operation 4310, operation 4320, and operation 4330 of FIG. 4.

According to an embodiment of the disclosure, additionally, during performance of the F1 auxiliary connection setup request procedure, a CU may request a DU of a base station different from that including the CU to (1) allocate a dedicated random access channel (RACH) resource to a UE having received a paging message transmitted by the CU so as to enable the UE to transmit a paging response-related RRC message, and (2) transfer, to the corresponding CU, an RRC message transmitted by the UE having accessed through the RACH resource. To this end, in operation 19250-1, DU-1 44-1 may transmit an F1 auxiliary connection setup request message to establish a connection with CU-2 42-2 of the base station different from that including DU-1 44-1. The F1 auxiliary connection setup request message may include paging support indication information indicating that allocation, by DU-1 44-1, of a dedicated random access channel (RACH) resource to the UE and a relevant function related to the allocation are supportable, so as to enable the UE having received the paging message transmitted by CU-2 42-2 to transmit a paging response-related RRC message. If the paging support indication information is not included, CU-2 42-2 may determine support or non-support by DU-1 44-1 according to an OAM configuration. CU-2 42-2 having received the F1 auxiliary connection setup request message from DU-1 44-1 may, in operation 19250-2, transmit an F1 auxiliary connection setup response message as a response message to DU-1 44-1. The F1 auxiliary connection setup response message may include paging support request information for, when the UE having received the paging message transmitted by CU-2 42-2 transmits a paging response-related RRC message to DU-1 44-1, requesting allocation of a dedicated random access channel (RACH) resource which may be used by the UE and support for the allocation of the dedicated random access channel (RACH) resource, and the paging support request information may include, for example, sync cell information. DU-1 44-1 having received the F1 auxiliary connection setup response message including the paging support request information from CU-2 42-2 may allocate the dedicated RACH resource requested by the CU-2 42-2 in operation 19250-3.

According to an embodiment of the disclosure, DU-2 44-2 included in the base station different from that including DU-1 44-1 performs an F1 setup request procedure to establish a connection with CU-2 42-2 of the same base station as that including DU-2 44-2 in operation 19300. Operation 19300 in FIG. 19 may follow a procedure from operation 19100 to operation 19230 in FIG. 4.

According to an embodiment of the disclosure, after DU-2 44-2 has completed F1 connection establishment with CU-2 42-2 of the same base station as that including DU-2 44-2, DU-2 44-2 may, from operation 19350-1 to operation 19350-4, perform an F1 auxiliary connection setup request procedure to establish a connection with CU-1 42-1 of the other base station. Operation 19350-1, operation 19350-2, operation 19350-3, and operation 19350-4 of FIG. 19 may follow a procedure including operation 4300, operation 4310, operation 4320, and operation 4330 of FIG. 4.

Additionally, according to an embodiment of the disclosure, in operation 19350-1, DU-2 44-2 may transmit an F1 auxiliary connection setup request message to establish a connection with CU-1 42-1 of the base station different from that including DU-2 44-2. The F1 auxiliary connection setup request message may include paging support indication information indicating that allocation, by DU-2 44-1, of a dedicated random access channel (RACH) resource to the UE and a relevant function are supportable, so as to enable the UE having received the paging message transmitted by CU-1 42-1 to transmit a paging response-related RRC message. If the paging support indication information is not included, CU-1 42-1 may determine support or non-support by DU-2 44-2 according to an OAM configuration.

According to an embodiment of the disclosure, during performance of a subsequent CU auxiliary connection configuration information modification procedure (gNB-CU auxiliary connection configuration update procedure), a CU may request a DU of a base station different from that including the CU to allocate a dedicated random access channel (RACH) resource to a UE having received a paging message transmitted by the CU so as to enable the UE to transmit a paging response-related RRC message, and to transfer, to the corresponding CU, an RRC message transmitted by the UE having accessed through the allocated dedicated RACH resource.

According to an embodiment of the disclosure, in operation 19400, CU-1 42-1 may transmit, to DU-2 44-2, a CU auxiliary connection configuration information modification (gNB-CU auxiliary connection configuration update) message, the CU auxiliary connection configuration information modification (gNB-CU auxiliary connection configuration update) message may include paging support request information for, when the UE having received the paging message transmitted by CU-1 42-1 transmits a paging response-related RRC message to DU-2 44-2, requesting allocation of a dedicated random access channel (RACH) resource which may be used by the UE and support for the allocation of the dedicated random access channel (RACH) resource, and the paging support request information may include, for example, sync cell information. DU-2 44-2 having received the CU auxiliary connection configuration information modification (gNB-CU auxiliary connection configuration update) message including the paging support request information from CU-1 42-1 may allocate the dedicated RACH resource requested by the CU-1 42-1 in operation 19410. In operation 19420, DU-2 44-2 may transmit a CU auxiliary connection configuration information modification identification (gNB-CU auxiliary connection configuration update acknowledge) message to CU-1 42-1.

According to an embodiment of the disclosure, in operation 19500, when transmission of a signaling message or user data to a UE in an RRC IDLE state is required, a CN 50 may transmit a paging message to a base station. When a paging message is received from the CN 50 or when transmission of a signaling message or user data to a UE in an RRC INACTIVE state is required, CU-1 42-1 may transmit a paging message to DU-0 44-0 in operation 19510. DU-0 44-0 having received the paging message from CU-1 42-1 may transmit a paging message to the sync cell in operation 19520. A UE 10 having received the paging message in operation 19520 may transmit a wake-up signal (WUS) in operation 19600, if necessary, by using system information already received by the UE 10 from the sync cell or information received by the UE 10 together with the paging message at the time of receiving the paging message. When a data cell to which the UE 10 transmits the wake-up signal (WUS) is a cell in an inactive state, DU-1 44-1 and DU-2 44-2 may operate, to be in an active state, the data cell to which the UE 10 transmits the wake-up signal (WUS), as in operation 19610 or operation 19615.

According to an embodiment of the disclosure, when the data cell is already in an active state or enters an active state in operation 19610 or operation 19615, DU-1 44-1 and DU 44-2 may start transmission of an SSB (synchronization signal and physical broadcast channel (SS and PBCH)) signal at the corresponding data cells in operation 19620 and operation 19625, respectively. The SSB signal may include system information transmitted by a corresponding data cell. When in operation 19625, the UE 10 receives an SSB signal transmitted by the data cell of DU-2 44-2, the UE 10 may perform a random access procedure in the data cell of DU-2 44-2 in operation 19630, based on system information included in the SSB signal. When the UE 10 completes the random access procedure in operation 19630, the UE 10 may, in operation 19640, transmit an RRC connection request (RRC connection setup request) message to DU-2 44-2. The RRC connection request (RRC connection setup request) message transmitted by the UE 10 may include cause information indicating that the UE requests an RRC connection in response to the paging message and, for example, the cause information may include information such as "mobile-terminated (MT)." DU-2 44-2 having received the RRC message from the UE 10 after the random access procedure may, in operation 19650, identify information on an RACH resource having been used by the UE for the random access and determine a CU to which the RRC connection request (RRC connection setup request) message transmitted by the UE 10 needs to be transmitted/forwarded. When DU-2 44-2 identifies, in operation 19650, that the UE 10 has performed the random access by using an RACH resource allocated for CU-1 42-1, DU-2 44-2 may, in operation 19660, transmit, to CU-1 42-1, an initial UL RRC message transfer including the RRC connection request (RRC connection setup request) message transmitted by the UE 10.

According to an embodiment of the disclosure, CU-1 42-1 having received, from DU-2 44-2, the initial UL RRC message transfer message including the RRC connection request (RRC connection setup request) message transmitted by the UE 10 may, in operation 19700, a subsequent RRC connection setup procedure with the UE 10-1 through DU-2 44-2.

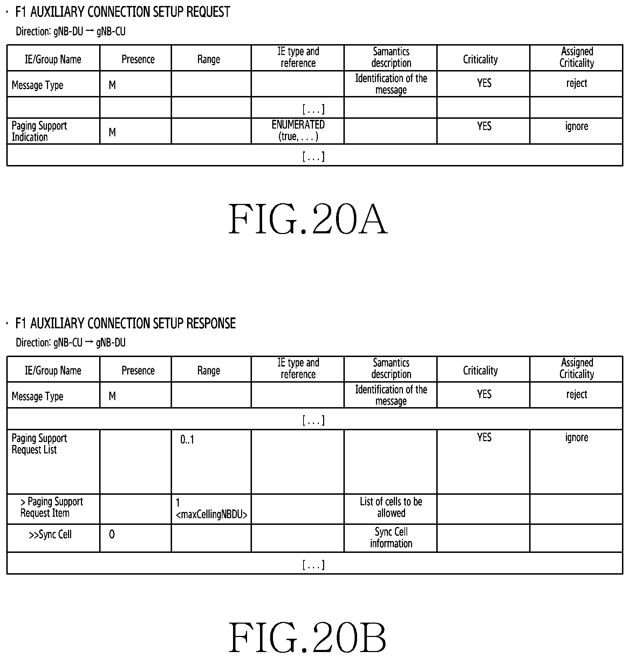

FIGS. 20A and 20B are diagrams illustrating an example of configurations of information added to messages for performing a connection establishment procedure between a DU and a CU of a base station different from that including the DU according to an embodiment of the disclosure.

More specifically, the example of the information configurations of FIG. 20A and FIG. 20B may be used in operation 19250-1, operation 19250-2, operation 19350-1, and operation 19350-2 in the embodiment of FIG. 19.

The message names or IE names used in FIGS. 20A and 20B correspond to an embodiment, and may be configured as other names or as configurations or values in other forms having the same purpose.

FIG. 20A illustrates an example of a configuration of an F1 auxiliary connection setup request (F1 AUXILIARY CONNECTION SETUP REQUEST) message transmitted by a DU to a CU of a base station different from that including the DU.

According to an embodiment of the disclosure, the F1 auxiliary connection setup request (F1 AUXILIARY CONNECTION SETUP REQUEST) message may additionally include, in addition to a message type IE used to distinguish message types, other IEs illustrated in FIG. 7A and other necessary IEs.

In addition, according to an embodiment of the disclosure, the F1 auxiliary connection setup request (F1 AUXILIARY CONNECTION SETUP REQUEST) message may include paging support indication IE information indicating whether the DU is able to support a dedicated random access channel (RACH) resource and a relevant function so as to enable the UE having received a paging message transmitted by a CU of a base station different from that including the DU to transmit a paging response-related RRC message.

FIG. 20B illustrates a configuration of an F1 auxiliary connection setup response (F1 AUXILIARY CONNECTION SETUP RESPONSE) message transmitted by a CU to a DU of a base station different from that including the CU.

According to an embodiment of the disclosure, the F1 auxiliary connection setup response (F1 AUXILIARY CONNECTION SETUP RESPONSE) message may additionally include, in addition to a message type IE used to distinguish message types, other IEs illustrated in FIG. 7B and other necessary IEs.

In addition, according to an embodiment of the disclosure, the F1 auxiliary connection setup response (F1 AUXILIARY CONNECTION SETUP RESPONSE) message may include a paging support request IE for, when a UE having received a paging message transmitted by the CU transmits a paging response-related RRC message to a DU of a base station different from that including the CU, requesting allocation of a dedicated random access channel (RACH) resource which may be used by the UE and support for the allocation of the dedicated RACH resource. The paging support request IE may include a sync cell IE including information on one or more sync cells.

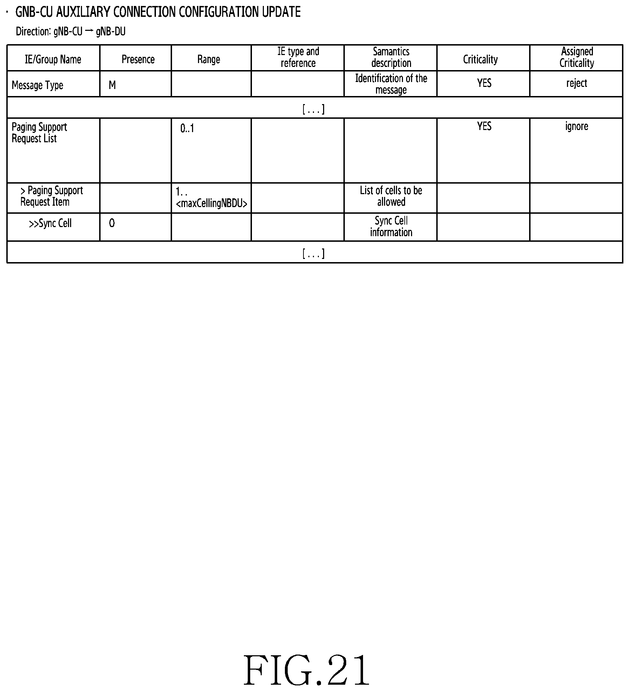

FIG. 21 is a diagram illustrating an example of a configuration of information added to messages used by a CU to transfer modified configuration information of the CU to a DU of a base station different from that including the CU according to an embodiment of the disclosure.

More specifically, the example of the information configuration of FIG. 21 may be used in operation 19400 in the embodiment of FIG. 19.

The message name or IE names used in FIG. 21 correspond to an embodiment, and may be configured as other names or as configurations or values in other forms having the same purpose.

FIG. 21 illustrates a configuration of a CU auxiliary connection configuration information modification (gNB-CU AUXILIARY CONNECTION CONFIGURATION UPDATE) message used by a CU to transfer modified configuration information of the CU to a DU of a base station different from that including the CU.

According to an embodiment of the disclosure, the CU auxiliary connection configuration information modification (gNB-CU AUXILIARY CONNECTION CONFIGURATION UPDATE) message may additionally include, in addition to a message type IE used to distinguish message types, other IEs illustrated in FIG. 10A and other necessary IEs.

In addition, according to an embodiment of the disclosure, the CU auxiliary connection configuration information modification (gNB-CU AUXILIARY CONNECTION CONFIGURATION UPDATE) message may include a paging support request IE for, when a UE having received a paging message transmitted by the CU transmits a paging response-related RRC message to a DU of a base station different from that including the CU, requesting allocation of a dedicated random access channel (RACH) resource which may be used by the UE and support for the allocation of the dedicated random access channel (RACH) resource. The paging support request IE may include a sync cell IE including information on one or more sync cells.

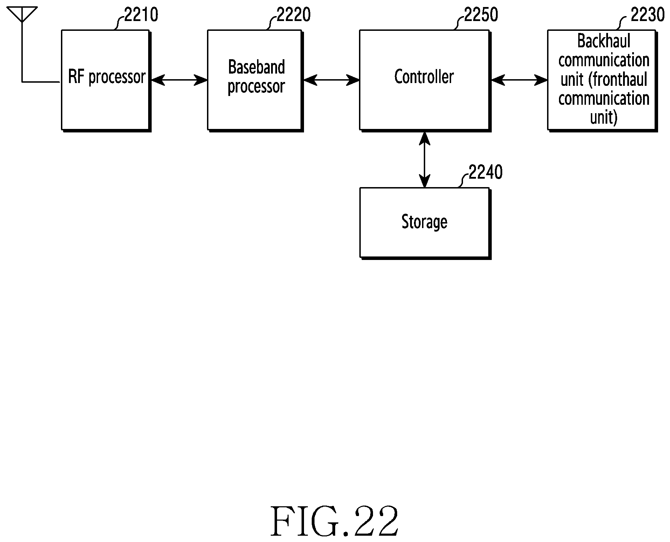

FIG. 22 is a block diagram illustrating a structural example of a base station according to an embodiment of the disclosure and also illustrating a structural example of a distributed unit (DU) of the base station. As illustrated in the drawing, the base station may include an RF processor 2210, a baseband processor 2220, a backhaul communication unit 2230, a storage 2240, and a controller 2250. In case that the base station is split into a central unit (CU) and a distributed unit (DU), the structure of FIG. 22 may be a structure of the distributed unit (DU), and for example, the backhaul communication unit 2230 may serve as the fronthaul communication unit 30 and functions performed by the controller 2250 may be limited to the functions of the DU.

The RF processor 2210 may perform functions for transmitting/receiving signals through a radio channel, such as signal band conversion and amplification. The RF processor 2210 may up-convert a baseband signal provided from the baseband processor 2220 to an RF band signal, may transmit the same through an antenna, and may down-convert an RF band signal received through the antenna to a baseband signal. For example, the RF processor 2210 may include a transmission filter, a reception filter, an amplifier, a mixer, an oscillator, a DAC, and an ADC. Although only one antenna is illustrated in the drawing, the first access node may include multiple antennas. In addition, the RF processor 2210 may include multiple RF chains. Furthermore, the RF processor 2210 may perform beamforming. For the beamforming, the RF processor 2210 may adjust the phase and magnitude of signals transmitted/received through multiple antennas or antenna elements, respectively. The RF processor may transmit one or more layers to perform a downward MIMO operation.

The baseband processor 2220 may perform functions of conversion between baseband signals and bitstrings according to the physical layer specifications of a first radio access technology. For example, during data transmission, the baseband processor 2220 may encode and modulate a transmitted bitstring to generate complex symbols. In addition, during data reception, the baseband processor 2220 may demodulate and decode a baseband signal provided from the RF processor 2210 to restore a received bitstring. For example, when following the OFDM scheme, during data transmission, the baseband processor 2220 may encode and modulate a transmitted bitstring to generate complex symbols, may map the complex symbols to subcarriers, and may configure OFDM symbols through IFFT operation and CP insertion. In addition, during data reception, the baseband processor 2220 may split a baseband signal provided from the RF processor 2210 at the OFDM symbol level, may restore signals mapped to subcarriers through FFT operation, and may restore a received bitstring through demodulation and decoding. The baseband processor 2220 and the RF processor 2210 transmit and receive signals as described above. Therefore, the baseband processor 2220 and the RF processor 2210 may be referred to as a transmitter, a receiver, a transceiver, or a communication unit.

The backhaul communication unit 2230 provides an interface for communicating with other nodes in the network. The backhaul communication unit 2230 converts bitstrings transmitted from the main base station to other nodes, for example, an auxiliary base station, a core network, etc., into physical signals, and converts physical signals received from the other nodes into bitstrings. In case that the structure of FIG. 22 is a structure of the DU of the base station, a fronthaul communication unit may be used instead of the backhaul communication unit 2230, and the fronthaul communication unit provides an interface for performing communication with the CU of the base station.

The storage 2240 may store basic programs, application programs, and data, such as configuration information, for the operation of the main base station or the DU of the base station. In addition, the storage 2240 provides the stored data at the request of the controller 2250.

The controller 2250 controls the overall operation of the base station or the DU of the base station. For example, the controller 2250 transmits/receives signals through the baseband processor 2220 and the RF processor 2210 or through the backhaul communication unit 2230. In addition, the controller 2250 records data in the storage 2240 and reads the data from the storage 2240. To this end, the controller 2250 may include at least one processor.

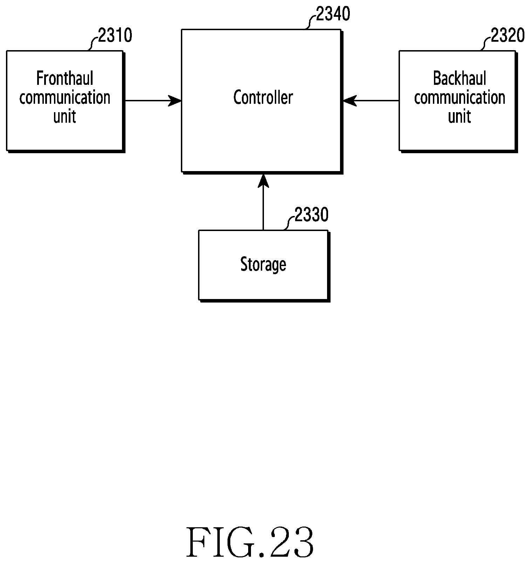

FIG. 23 is a block diagram illustrating a structural example of a central unit (CU) of a base station according to an embodiment of the disclosure. As illustrated in the drawing, the CU of the base station may include a fronthaul communication unit 2310, a backhaul communication unit 2320, a storage 2330, and a controller 2340.

The fronthaul communication unit 2310 provides an interface for performing communication with DUs of the base station. The fronthaul communication unit 2310 converts bitstrings transmitted to the DUs into physical signals, and converts physical signals received from the DUs into bitstrings.

The backhaul communication unit 2320 provides an interface for communicating with other nodes in the network. The backhaul communication unit 2320 converts bitstrings transmitted from the main base station to other nodes, for example, an auxiliary base station, a core network, etc., into physical signals, and converts physical signals received from the other nodes into bitstrings.

The fronthaul communication unit 2310 and the backhaul communication unit 2320 may be configured to be supported in the same block without distinguishing therebetween.

The storage 2230 may store basic programs, application programs, and data, such as configuration information, for the operation of the CU of the main base station. Particularly, the storage 2330 may store information regarding a bearer allocated to a connected UE, a measurement result reported from the connected UE, and the like. In addition, the storage 2330 may store information serving as a criterion to determine whether to provide multi-connectivity to a UE or to suspend the same. In addition, the storage 2330 provides the stored data at the request of the controller 2340.

The controller 2340 controls the overall operation of the base station. For example, the controller 2340 may transmit/receive signals through the fronthaul communication unit 2310 and the baseband processor 2320. In addition, the controller 2340 records data in the storage 2330 and reads the data from the storage 2330. To this end, the controller 2340 may include at least one processor.

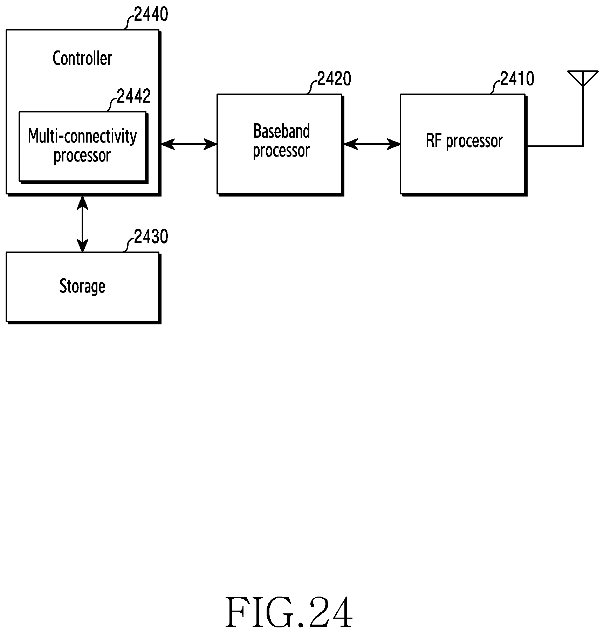

FIG. 24 is a block diagram illustrating a structural example of a user equipment (UE) according to an embodiment of the disclosure. Referring to the drawing, the UE may include a radio frequency (RF) processor 2410, a baseband processor 2420, a storage 2430, and a controller 2440. The RF processor 2410 may perform functions for transmitting/receiving signals through a radio channel, such as signal band conversion and amplification. The RF processor 2410 may up-convert a baseband signal provided from the baseband processor 2420 to an RF band signal, may transmit the same through an antenna, and may down-convert an RF band signal received through the antenna to a baseband signal. For example, the RF processor 2410 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 2410 may include multiple RF chains. Furthermore, the RF processor 2410 may perform beamforming. For the beamforming, the RF processor 2410 may adjust the phase and magnitude of signals transmitted/received through multiple antennas or antenna elements, respectively. In addition, the RF processor may perform MIMO, and may receive multiple layers when performing an MIMO operation.

The baseband processor 2420 may perform functions of conversion between baseband signals and bitstrings according to the physical layer specifications of the system. For example, during data transmission, the baseband processor 2420 may encode and modulate a transmitted bitstring to generate complex symbols. In addition, during data reception, the baseband processor 2420 may demodulate and decode a baseband signal provided from the RF processor 2410 to restore a received bitstring. For example, when following the orthogonal frequency division multiplexing (OFDM) scheme, during data transmission, the baseband processor 2420 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 2420 may split a baseband signal provided from the RF processor 2410 at the OFDM symbol level, may restore signals mapped to subcarriers through a fast Fourier transform (FFT) operation, and may restore a received bitstring through demodulation and decoding.

The baseband processor 2420 and the RF processor 2410 may transmit and receive signals as described above. Therefore, the baseband processor 2420 and the RF processor 2410 may be referred to as a transmitter, a receiver, a transceiver, or a communication unit. Furthermore, at least one of the baseband processor 2420 and the RF processor 2410 may include multiple communication modules to support multiple different radio access technologies. In addition, at least one of the baseband processor 2420 and the RF processor 2410 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

The storage 2430 may store basic programs, application programs, and data, such as configuration information, for the operation of the UE. In addition, the storage 2430 may provide the stored data at the request of the controller 2440.

The controller 2440 controls the overall operation of the UE. For example, the controller 2440 may transmit/receive signals through the baseband processor 2420 and the RF processor 2410. In addition, the controller 2440 records data in the storage 2430 and reads the data from the storage 2430. To this end, the controller 2440 may include at least one processor. For example, the controller 2440 may include a communication processor (CP) configured to perform control for communication, and an application processor (AP) configured to control upper layers such as application programs.

It should be noted that the above-described configuration diagrams, illustrative diagrams of control/data signal transmission methods, illustrative diagrams of operation procedures, and structural diagrams are not intended to limit the scope of the disclosure. That is, all constituent elements, entities, or operation steps described in the embodiments of the disclosure should not be construed as being essential for the implementation of the disclosure, and the disclosure may be implemented without impairing the essential features of the disclosure by including only some constituent elements. Also, the above respective embodiments may be employed in combination, as necessary. For example, the methods proposed in the disclosure may be partially combined with each other to operate a network entity and a terminal.

The above-described operations of a base station or terminal may be implemented by providing any unit of the base station or terminal device with a memory device storing corresponding program codes. That is, a controller of the base station or terminal device may perform the above-described operations by reading and executing the program codes stored in the memory device by means of a processor or central processing unit (CPU).

Various units or modules of an entity, a base station device, or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof. That is, it will be apparent to those skilled in the art that other variants based on the technical idea of the disclosure may be implemented. Also, the above respective embodiments may be employed in combination, as necessary. For example, the methods proposed in the disclosure may be partially combined with each other to operate a network entity and a terminal. Moreover, although the above embodiments have been described based on 5G and NR systems, other variants based on the technical idea of the embodiments may also be implemented in other communication systems such as LTE, LTE-A, and LTE-A-Pro systems.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a central unit (CU) of a first base station in a wireless communication system, the method comprising:
receiving, from a terminal, a radio measurement report message for a serving cell related to a distributed unit (DU) of the first base station; and
based on the radio measurement report message, transmitting a terminal context setup request message, which is related to a serving cell change to a cell related to a DU of a second base station, to the DU of the second base station through a connection established between the CU of the first base station and the DU of the second base station.

2. The method of claim 1, further comprising:
receiving, from the DU of the second base station, a terminal context setup response message through the connection established between the CU of the first base station and the DU of the second base station;
transmitting, to the DU of the first base station, a terminal context modification request message;
receiving, from the DU of the first base station, a terminal context modification response message; and
receiving, from the DU of the second base station, a radio resource control (RRC) reconfiguration completion message of the terminal through the connection established between the CU of the first base station and the DU of the second base station.

3. The method of claim 2, the method further comprising:
transmitting, to the DU of the first base station, a terminal context modification release message; and
receiving, from the DU of the first base station, a terminal context release completion message.

4. The method of claim 1, the method further comprising:
receiving, from the DU of the second base station, a terminal context setup failure message, which indicates that the serving cell change through the connection established between the CU of the first base station and the DU of the second base station is not supported, through the connection established between the CU of the first base station and the DU of the second base station.

5. The method of claim 4, wherein the terminal context setup failure message comprises information on a cause of why the serving cell change through the connection established between the CU of the first base station and the DU of the second base station is not supported.

6. The method of claim 4, the method further comprising:
transmitting, to a CU of the second base station, a handover request message for the serving cell change;
receiving, from the CU of the second base station, a handover identification message;
transmitting, to the DU of the first base station, a terminal context modification request message;
receiving, from the DU of the first base station, a terminal context modification response message;
receiving, from the CU of the second base station, a terminal context release message;
transmitting, to the DU of the first base station, a terminal context release command message; and
receiving, from the DU of the first base station, a terminal context release completion message,
wherein the context of the terminal related to the first base station is released.

7. The method of claim 1, further comprising:
receiving, from the DU of the second base station, an auxiliary connection setup request message for establishing the connection between the CU of the first base station and the DU of the second base station, the auxiliary connection setup request message comprising information on the DU of the second base station; and
transmitting, to the DU of the second base station, an auxiliary connection setup response message,
wherein the auxiliary connection setup response message comprises information on the CU of the first base station and information on a cell supported based on the connection between the CU of the first base station and the DU of the second base station among cells activated by the DU of the second base station.

8. The method of claim 1, the method further comprising:
receiving, from the DU of the first base station, information related to a connection between the DU of the first base station and a CU of the second base station.

9. A central unit (CU) of a first base station in a wireless communication system, the CU comprising:
a transceiver; and
a controller connected to the transceiver,
wherein the controller is configured to:
receive, from a terminal, a radio measurement report message for a serving cell related to a distributed unit (DU) of the first base station; and
based on the radio measurement report message, transmit a terminal context setup request message, which is related to a serving cell change to a cell related to a DU of a second base station, to the DU of the second base station through a connection established between the CU of the first base station and the DU of the second base station.

10. The CU of claim 9, wherein the controller is further configured to:
receive, from the DU of the second base station, a terminal context setup response message through the connection established between the CU of the first base station and the DU of the second base station;
transmit, to the DU of the first base station, a terminal context modification request message;
receive, from the DU of the first base station, a terminal context modification response message; and
receive, from the DU of the second base station, a radio resource control (RRC) reconfiguration completion message of the terminal through the connection established between the CU of the first base station and the DU of the second base station.

11. The CU of claim 10, wherein the controller is further configured to:
transmit, to the DU of the first base station, a terminal context modification release message; and
receive, from the DU of the first base station, a terminal context release completion message.

12. The CU of claim 9, wherein the controller is further configured to:
receive, from the DU of the second base station, a terminal context setup failure message, which indicates that the serving cell change through the connection established between the CU of the first base station and the DU of the second base station is not supported, through the connection established between the CU of the first base station and the DU of the second base station.

13. The CU of claim 12, wherein the terminal context setup failure message comprises information on a cause of why the serving cell change through the connection established between the CU of the first base station and the DU of the second base station is not supported.

14. The CU of claim 12, wherein the controller is further configured to:
transmit, to a CU of the second base station, a handover request message for the serving cell change;
receive, to a CU of the second base station, a handover identification message;
transmit, to the DU of the first base station, a terminal context modification request message;
receive, from the DU of the first base station, a terminal context modification response message;
receive, from the CU of the second base station, a terminal context release message;
transmit, to the DU of the first base station, a terminal context release command message; and
receive, from the DU of the first base station, a terminal context release completion message, and
wherein the context of the terminal related to the first base station is released.

15. The CU of claim 9, wherein the controller is further configured to:
receive, from the DU of the second base station, an auxiliary connection setup request message for establishing a connection between the CU of the first base station and the DU of the second base station, the auxiliary connection setup request message comprising information on the DU of the second base station; and
transmit, to the DU of the second base station, an auxiliary connection setup response message, and
wherein the auxiliary connection setup response message comprises information on the CU of the first base station and information on a cell supported based on the connection between the CU of the first base station and the DU of the second base station among cells activated by the DU of the second base station.
